# EUROPEAN PATENT SPECIFICATION

(11) **EP 4 286 195 B1**
(45) Date of publication and mention of the grant of the patent: **05.08.2026**
(21) Application number: 22194218.8
(22) Date of filing: 06.09.2022
(51) Int. Cl.: B60K 11/02, B60K 1/00

(54) **THERMAL MANAGEMENT SYSTEM FOR COOLING OR HEATING A VEHICLE COMPONENT, METHOD FOR OPERATING A THERMAL MANAGEMENT SYSTEM AND VEHICLE COMPRISING A THERMAL MANAGEMENT SYSTEM**
THERMOMANAGEMENTSYSTEM ZUM KÜHLEN ODER HEIZEN EINER FAHRZEUGKOMPONENTE, VERFAHREN ZUM BETREIBEN EINES THERMOMANAGEMENTSYSTEMS UND FAHRZEUG MIT EINEM THERMOMANAGEMENTSYSTEM
SYSTÈME DE GESTION THERMIQUE DE REFROIDISSEMENT OU DE CHAUFFAGE D'UN COMPOSANT DE VÉHICULE, PROCÉDÉ DE FONCTIONNEMENT D'UN SYSTÈME DE GESTION THERMIQUE ET VÉHICULE COMPRENANT UN SYSTÈME DE GESTION THERMIQUE

(30) Priority: 31.05.2022 EP 22176520
(43) Date of publication of application: 06.12.2023
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BERGMAN, Ulf, 423 38 TORSLANDA (SE); JÖNSSON, Mikael, 43994 ONSALA (SE)
(74) Representative: Zacco Sweden AB

(56) References cited:
- US-A1- 2015 217 622
- US-A1- 2015 258 875
- US-A1- 2017 218 833
- US-A1- 2017 259 833

## Description

### TECHNICAL FIELD

The present invention relates to a thermal management system for cooling or heating a vehicle component. The thermal management system comprises a main thermal control circuit connected to the vehicle component and a secondary thermal control circuit connected to the vehicle component. The thermal management system is configured for being operated in a normal operational state by means of the main thermal control circuit. The invention further relates to a method for operating a thermal management system for cooling or heating a vehicle component and a vehicle comprising a thermal management system for cooling or heating a vehicle component.

### BACKGROUND

Vehicle cooling and heating systems are commonly used in vehicle applications for controlling the temperature ranges of different critical vehicle components, such as for example vehicle control units, battery units, power electronics units, and other types of vehicle units or components being part of the vehicle construction. In for example new energy vehicles, such as hybrid or electric vehicles, including battery electric vehicles, fuel-cell electric vehicles and plug-in hybrid electric vehicles, the high voltage battery components used for providing energy to the electric motors as well as power electronic components and control units need to be temperature controlled. In normal conditions, the temperature controlling may depend on for example the driving conditions of the vehicle, the ambient temperature, and the type of components used in the vehicle system. The thermal management system of the vehicle is constructed for cooling or heating the respective vehicle systems.

For new energy vehicles, the thermal management systems need a redesign compared to the systems used in traditional vehicles with internal combustion engines. These systems are often complex in design and construction, involving a high number of components that take up space in the vehicle and increase the weight of the vehicle construction. This leads to component packaging problems and weight issues, and further, the thermal management systems are often expensive and non-flexible in construction.

In new energy vehicle applications, there is a high demand on cooling or heating critical vehicle components, and thermal control circuits with heat transfer fluid are operated to control the temperature levels of the vehicle components. One example of critical vehicle components that need temperature controlling are central processing units (CPU). It is difficult to predict the exact temperature of a CPU, and the functionality of the CPU is not derated with increased temperature. When being overheated, the CPU fails permanently at high costs and risk of functional loss during operation.

Upon increasing temperature of the CPU or other critical vehicle component, it is essential to cool the CPU or vehicle component to a suitable operational temperature. If a thermal control circuit that is controlling the temperature of the vehicle component is malfunctioning or not providing sufficient temperature regulation, there is a high risk for overheating or damaging the vehicle component.

A malfunction of the thermal management system may for example be a leakage or blockage of the thermal control circuit, leading to inefficient cooling of the critical vehicle component. In current systems used, it is however difficult to detect and quickly act upon a leakage or blockage of a thermal control circuit. There is thus a need for improved thermal management systems, where the systems are simple in design and construction with fewer components compared to current systems used. The system should further be designed to act quickly upon temperature regulation needs, such as a malfunctioning thermal control circuit or non-sufficient temperature regulation in order to establish efficient temperature regulation of a critical vehicle component.

Patent publication US 2015/0217622 A1 discloses a thermal management system for a vehicle, where the system is cooling a plurality of cooling target devices. To cool the respective cooling target devices, a coolant to circulate through the respective cooling target devices is switchable among the devices via a switching valve.

Patent publication US 2017/0218833 A1 discloses a two-pump apparatus including two pumps and a circuit-changing valve connected to two cooling circuits, where the valve is controlled by a pressure differential created by the pumps.

Patent publication US 2017/0259833 A1 discloses a vehicle cooling system, where a coolant is circulating in a first cooling circuit and in a second cooling circuit. A first heat source to be cooled may be arranged in the first cooling circuit and a second heat source to be cooled may be arranged in the second cooling circuit.

### SUMMARY

An object of the present invention is to provide a thermal management system for cooling or heating a vehicle component, a method for operating a thermal management system for cooling or heating a vehicle component, and a vehicle comprising a thermal management system for cooling or heating a vehicle component, where the previously mentioned problems are avoided. This object is achieved by the features of the independent claims. The dependent claims contain further developments of the thermal management system for cooling or heating a vehicle component and the method for operating a thermal management system for cooling or heating a vehicle component.

The invention concerns a thermal management system for cooling or heating a vehicle component, where the thermal management system comprises a main thermal control circuit connected to the vehicle component and a secondary thermal control circuit connected to the vehicle component. The thermal management system is configured for being operated in a normal operational state by means of the main thermal control circuit, or in a temporary operational state by means of the secondary thermal control circuit. The thermal management system comprises a valve unit. The main thermal control circuit is connected to the vehicle component via the valve unit in the normal operational state, and the secondary thermal control circuit is temporarily connected to the vehicle component via the valve unit in the temporary operational state upon detection of a cooling requirement or a heating requirement of the vehicle component. The thermal management system is configured for temporarily activating the secondary thermal control circuit for cooling or heating the vehicle component in the temporary operational state. The valve unit comprises a first outlet flow port and a first inlet flow port connected to the vehicle component, a second inlet flow port and a second outlet flow port connected to the main thermal control circuit, and a third inlet flow port and a third outlet flow port connected to the secondary thermal control circuit.

Advantages with these features are that the thermal management system can be made simple in design and construction, and the secondary thermal control circuit is efficiently cooling or heating the vehicle component upon detection of a cooling requirement or a heating requirement of the vehicle component. The system can be designed without necessarily affecting the capability of the main thermal control circuit to provide flow to other vehicle components. The system is enabling efficient temperature regulation if a thermal control circuit that is controlling the temperature of the vehicle component is not providing sufficient temperature regulation, preventing inter alia the risk for overheating or damaging the vehicle component. The thermal management system can be made simple in design and construction using the valve unit, with fewer components compared to traditional systems used. The system is designed to act quickly upon temperature regulation needs, such as non-sufficient temperature regulation in order to establish efficient temperature regulation of a critical vehicle component. By using the secondary thermal control circuit, efficient cooling or heating of the vehicle component is enabled.

In one embodiment, the thermal management system is configured for being operated in the temporary operational state by means of the secondary thermal control circuit upon a boost cooling or heating requirement of the vehicle component. A boost cooling or heating requirement occurs upon detection of inefficient cooling or inefficient heating of the vehicle component. The thermal management system is designed to act quickly upon a boost cooling or heating requirement of the vehicle component. By using the secondary thermal control circuit, efficient cooling or heating of the vehicle component is enabled.

In one embodiment, the thermal management system comprises at least one sensor configured for detecting the boost cooling or heating requirement of the vehicle component. The at least one sensor is a temperature sensor connected to the main thermal control circuit and/or the vehicle component. The at least one sensor is configured to detect the boost cooling or heating requirement in order for the thermal management system to change from the normal operational state to the temporary operational state. The at least one sensor is configured for detecting the boost cooling or heating requirement of the vehicle component. The system is designed to detect and quickly act upon the boost cooling or heating requirement of the vehicle component by the at least one sensor.

In one embodiment, the thermal management system is configured for being operated in the temporary operational state by means of the secondary thermal control circuit upon a malfunction cooling requirement of the main thermal control circuit. The malfunction of the main thermal control circuit is a leakage of heat transfer fluid from the main thermal control circuit or a blockage of heat transfer fluid in the main thermal control circuit. A malfunction cooling requirement thus occurs upon a leakage or blockage of the main thermal control circuit, leading to inefficient cooling of the vehicle component. The thermal management system is designed to act quickly upon a malfunctioning main thermal control circuit. By using the secondary thermal control circuit, efficient cooling of the vehicle component is enabled.

In one embodiment, the thermal management system comprises at least one sensor configured for detecting the malfunction cooling requirement of the main thermal control circuit. The at least one sensor is a pressure sensor, a temperature sensor and/or a flow sensor connected to the main thermal control circuit. The at least one sensor is configured for detecting the leakage or blockage of the main thermal control circuit. When the malfunction occurs, the at least one sensor is configured to detect the malfunction in order for the thermal management system to change from the normal operational state to the temporary operational state. The at least one sensor is configured for detecting the leakage or blockage of the main thermal control circuit. The system is designed to detect and quickly act upon a leakage or blockage of the main thermal control circuit by the at least one sensor. A combination of different types of sensors may be used in the main thermal control circuit for an efficient and fast detection of the malfunction.

In one embodiment, the valve unit is adapted to disconnect the secondary thermal control circuit from fluid communication with the vehicle component in the normal operational state, and the valve unit is adapted to disconnect the main thermal control circuit from fluid communication with the vehicle component in the temporary operational state. The disconnection of the respective circuits is allowing only one circuit for cooling or heating the vehicle component for an efficient operation of the thermal management system, where the main thermal control circuit is used for cooling or heating the vehicle component in the normal operational state and the secondary thermal control circuit is used for cooling or heating the vehicle component in the temporary operational state.

In one embodiment, the thermal management system comprises a further thermal control circuit connected to the vehicle component and to the valve unit. Each one of the main thermal control circuit and the secondary thermal control circuit is connectable to the vehicle component via the valve unit and the further thermal control circuit. The further thermal control circuit is arranged for transporting heat transfer fluid to the vehicle component from the valve unit and from the vehicle component to the valve unit, both in the normal operational state and the temporary operational state. The further thermal control circuit may be formed by conduits, pipes or other suitable connection means for transporting the heat transfer fluid from the valve unit to the vehicle component, and transporting the heat transfer fluid from the vehicle component to the valve unit. The vehicle component suitably comprises flow channels or similar arrangements for cooling or heating the vehicle component with the heat transfer fluid.

In one embodiment, the valve unit comprises a valve body. The valve body is in the normal operational state arranged in a first valve position, and the valve body is in the temporary operational state arranged in a second valve position. In the first valve position, the second inlet flow port is in fluid communication with the first outlet flow port and the second outlet flow port is in fluid communication with the first inlet flow port. In the second valve position, the third inlet flow port is in fluid communication with the first outlet flow port and the third outlet flow port is in fluid communication with the first inlet flow port. The valve body may have any suitable configuration, such as a rotating valve body, a sliding valve body, or a pivoting flap member.

In one embodiment, in the first valve position the valve body is blocking fluid communication between the third inlet flow port and the first outlet flow port and blocking fluid communication between the third outlet flow port and the first inlet flow port. In the second valve position the valve body is blocking fluid communication between the second inlet flow port and the first outlet flow port and blocking fluid communication between the second outlet flow port and the first inlet flow port.

In one embodiment, the secondary thermal control circuit comprises a storage unit configured for holding a volume of heat transfer fluid. The volume of heat transfer fluid is arranged as a thermal buffer for cooling or heating the vehicle component in the temporary operational state. The storage unit is used as a flow through volume for heat transfer fluid. The volume of heat transfer fluid in the storage unit acts as a thermal buffer for a specific cooling or heating requirement of the vehicle component. In one embodiment, the secondary thermal control circuit comprises a pump for circulating heat transfer fluid in the secondary thermal control circuit to the vehicle component and through the storage unit in the temporary operational state. The thermal management system is configured for activating the pump upon detection of the cooling requirement or the heating requirement of the vehicle component. The pump may have any suitable configuration for transporting heat transfer fluid, and the flow rate of heat transfer fluid from the pump may be determined depending on for example the volume of heat transfer fluid in the storage unit, the temperature of the heat transfer fluid in the storage unit, and the temperature of the vehicle component. In one embodiment, in the normal operational state the main thermal control circuit is fully separated from the secondary thermal control circuit by the valve unit, and in the temporary operational state the secondary thermal control circuit is fully separated from the main thermal control circuit by the valve unit. The separation of the respective circuits is preventing flow between the circuits and only allowing the main thermal control circuit for cooling or heating the vehicle component in the normal operational state, and only allowing the secondary thermal control circuit for cooling or heating the vehicle component in the temporary operational state. Depending on the construction of the valve unit, this separation may not necessarily prohibit the respective thermal control circuits to provide flow in its own circuit.

The invention further concerns a method for operating a thermal management system for cooling or heating a vehicle component. The thermal management system comprises a main thermal control circuit connected to the vehicle component, a secondary thermal control circuit connected to the vehicle component, and a valve unit. The valve unit comprises a first outlet flow port and a first inlet flow port connected to the vehicle component, a second inlet flow port and a second outlet flow port connected to the main thermal control circuit, and a third inlet flow port and a third outlet flow port connected to the secondary thermal control circuit. The valve unit comprises a valve body. The thermal management system is operated in a normal operational state by means of the main thermal control circuit, or in a temporary operational state by means of the secondary thermal control circuit. The method comprises the steps: arranging the main thermal control circuit in fluid communication with the vehicle component via the valve unit in the normal operational state; arranging the secondary thermal control circuit temporarily in fluid communication with the vehicle component via the valve unit in the temporary operational state upon detection of a cooling requirement or a heating requirement of the vehicle component, and temporarily activating the secondary thermal control circuit for cooling or heating the vehicle component in the temporary operational state; arranging the valve body in a first valve position in the normal operational state, where in the first valve position the second inlet flow port is in fluid communication with the first outlet flow port and the second outlet flow port is in fluid communication with the first inlet flow port; arranging the valve body in a second valve position in the temporary operational state, where in the second valve position the third inlet flow port is in fluid communication with the first outlet flow port and the third outlet flow port is in fluid communication with the first inlet flow port.

Advantages with these features are that the thermal management system can be made simple in design and construction, and the secondary thermal control circuit is efficiently cooling or heating the vehicle component upon detection of a cooling requirement or a heating requirement of the vehicle component. The system is enabling efficient temperature regulation if a thermal control circuit that is controlling the temperature of the vehicle component is not providing sufficient temperature regulation, preventing inter alia risk for overheating or damaging the vehicle component. The thermal management system can be made simple in design and construction using the valve unit, with fewer components compared to traditional systems used. The system is designed to act quickly upon temperature regulation needs, such as non-sufficient temperature regulation in order to establish efficient temperature regulation of a critical vehicle component. By using the secondary thermal control circuit, efficient cooling or heating the vehicle component is enabled. The valve body may have any suitable configuration, such as for example a rotating valve body, a sliding valve body or a pivoting flap member.

In one embodiment, the method further comprises the step: operating the thermal management system in the temporary operational state by means of the secondary thermal control circuit upon a boost cooling or heating requirement of the vehicle component. A boost cooling or heating requirement occurs upon detection of inefficient cooling or inefficient heating of the vehicle component. The thermal management system is designed to act quickly upon a boost cooling or heating requirement of the vehicle component. By using the secondary thermal control circuit, efficient cooling or heating of the vehicle component is enabled.

In one embodiment, the thermal management system comprises at least one sensor, where the at least one sensor is a temperature sensor connected to the main thermal control circuit and/or the vehicle component. The method further comprises the step: detecting the boost cooling or heating requirement of the vehicle component by the at least one sensor. The at least one sensor is configured to detect the boost cooling or heating requirement in order for the thermal management system to change from the normal operational state to the temporary operational state. The at least one sensor is configured for detecting the boost cooling or heating requirement of the vehicle component. The system is designed to detect and quickly act upon the boost cooling or heating requirement of the vehicle component by the at least one sensor.

In one embodiment, the method further comprises the step: operating the thermal management system in the temporary operational state by means of the secondary thermal control circuit upon a malfunction cooling requirement of the main thermal control circuit, where the malfunction of the main thermal control circuit is a leakage of heat transfer fluid from the main thermal control circuit or a blockage of heat transfer fluid in the main thermal control circuit. A malfunction cooling requirement thus occurs upon a leakage or blockage of the main thermal control circuit, leading to inefficient cooling of the vehicle component. The thermal management system is designed to act quickly upon a malfunctioning main thermal control circuit. By using the secondary thermal control circuit, efficient cooling of the vehicle component is enabled.

In one embodiment, the thermal management system comprises at least one sensor, where the at least one sensor is a pressure sensor, a temperature sensor and/or a flow sensor connected to the main thermal control circuit. The method further comprises the step: detecting the leakage or blockage of the main thermal control circuit by the at least one sensor. When the malfunction occurs, the at least one sensor is detecting the malfunction in order for the thermal management system to change from the normal operational state to the temporary operational state. The at least one sensor is configured for detecting the leakage or blockage of the main thermal control circuit. The system is designed to detect and quickly act upon a leakage or blockage of the main thermal control circuit by the at least one sensor. The main thermal control circuit may be designed with a combination of different types of sensors for an efficient and fast detection of the leakage or blockage.

In one embodiment, the method further comprises the steps: disconnecting the secondary thermal control circuit from fluid communication with the vehicle component by the valve unit in the normal operational state; disconnecting the main thermal control circuit from fluid communication with the vehicle component by the valve unit in the temporary operational state. The disconnection of the respective circuits is allowing only one circuit for cooling or heating the vehicle component for an efficient operation of the thermal management system.

In one embodiment, the method further comprises the steps: blocking fluid communication between the third inlet flow port and the first outlet flow port and blocking fluid communication between the third outlet flow port and the first inlet flow port by the valve body in the first valve position; blocking fluid communication between the second inlet flow port and the first outlet flow port and blocking fluid communication between the second outlet flow port and the first inlet flow port by the valve body in the second valve position.

In one embodiment, the secondary thermal control circuit comprises a storage unit configured for holding a volume of heat transfer fluid. The volume of heat transfer fluid is arranged as a thermal buffer for cooling or heating the vehicle component in the temporary operational state. The secondary thermal control circuit comprises a pump for circulating heat transfer fluid in the secondary thermal control circuit to the vehicle component and through the storage unit in the temporary operational state. The method further comprises the step: activating the pump upon detection of the cooling requirement or the heating requirement of the vehicle component. The storage unit is used as a flow through volume for heat transfer fluid. The volume of heat transfer fluid in the storage unit acts as a thermal buffer for specific cooling temperature or heating temperature of the vehicle component. The thermal management system is configured for activating the pump upon detection of the cooling requirement or the heating requirement of the main thermal control circuit. The pump may have any suitable configuration for transporting heat transfer fluid.

In one embodiment, the method further comprises the steps: fully separating the main thermal control circuit from the secondary thermal control circuit by the valve unit in the normal operational state; fully separating the secondary thermal control circuit from the main thermal control circuit by the valve unit in the temporary operational state. The separation of the respective circuits is preventing flow between the circuits and only allowing the main thermal control circuit for cooling or heating the vehicle component in the normal operational state and only allowing the secondary thermal control circuit for cooling or heating the vehicle component in the temporary operational state.

The invention further concerns a vehicle comprising a thermal management system for cooling or heating a vehicle component described above.

### BRIEF DESCRIPTION OF DRAWINGS

The invention will be described in detail in the following, with reference to the attached drawings, in which
- Fig. 1: shows schematically, a system layout view of a thermal management system, according to an embodiment,
- Fig. 2a-b: show schematically, system layout views of the thermal management system in a normal operational state and a temporary operational state,
- Fig. 3: shows schematically, a perspective view of a thermal management system, according to an embodiment,
- Fig. 4a-b: show schematically, perspective views of the thermal management system in a normal operational state and a temporary operational state,
- Fig. 5a-b: show schematically, perspective views of a valve unit of the thermal management system and a valve body of the valve unit, according to an embodiment,
- Fig. 6a-b: show schematically, cross-sectional side views of the valve unit in the normal operational state and the temporary operational state, and
- Fig. 7a-b: show schematically, layout views of a valve unit of an alternative embodiment in the normal operational state and the temporary operational state.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

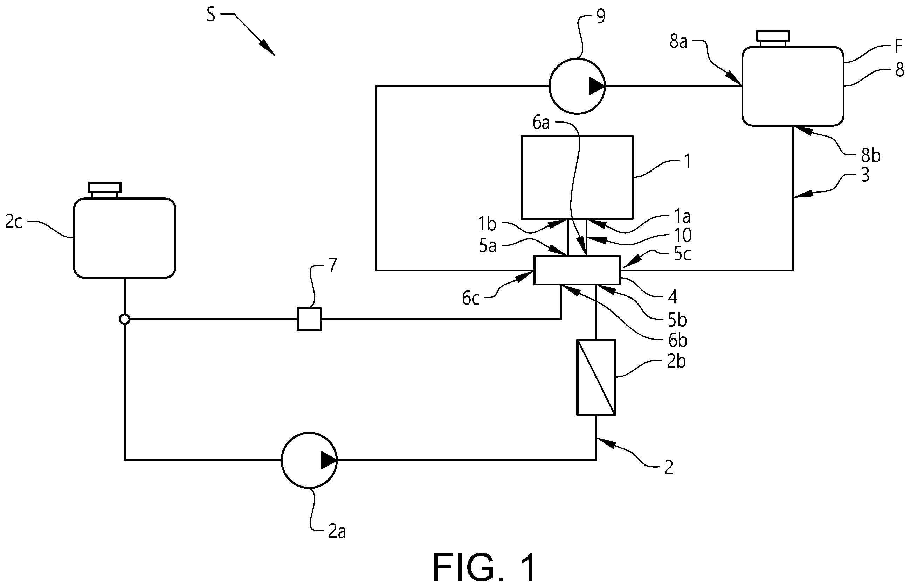

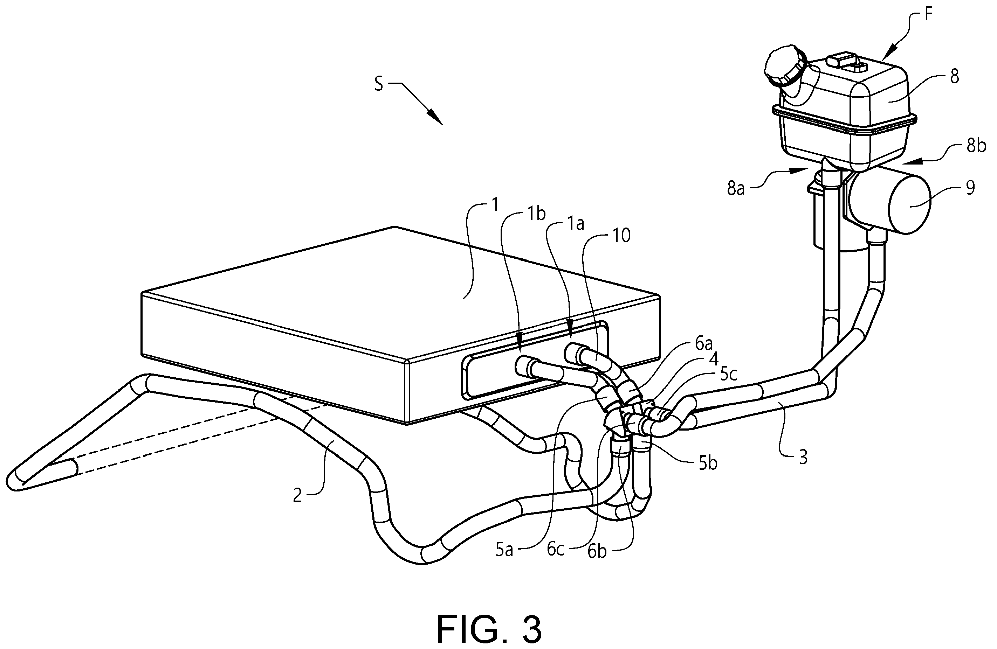

Figure 1 schematically shows a system layout view of a thermal management system S for cooling or heating a vehicle component 1. The thermal management system S comprises a main thermal control circuit 2 connected to the vehicle component 1 and a secondary thermal control circuit 3 connected to the vehicle component 1. In figure 3, a perspective view of a thermal management system S is schematically shown.

The vehicle component 1 may be any critical component or system of a vehicle that needs cooling or heating during operation. Examples of vehicle components 1 that need temperature control are vehicle control units including central processing units (CPU), battery units, power electronics units, and other types of vehicle units or components being part of the vehicle construction. One specific example of a critical vehicle components that need temperature control are CPUs, where it is difficult to predict the exact temperature of a CPU. The functionality of the CPU is not derated with increased temperature and when being overheated, the CPU fails permanently at high costs and risk of functional loss during operation.

As illustrated in for example figures 1 and 3, the thermal management system S comprises a valve unit 4. The valve unit 4 is connecting the main thermal control circuit 2 to the vehicle component 1. The valve unit 4 is further connecting the secondary thermal control circuit 3 to the vehicle component 1.

The main thermal control circuit may 2 may have any suitable configuration for cooling or heating the vehicle component 1, and in figures 1 and 3 exemplified embodiments of system configurations are schematically shown. In the embodiment shown in figure 1, the main thermal control circuit 2 comprises a circulation pump 2a for circulating heat transfer fluid F, a heat exchanger 2b for cooling or heating the heat transfer fluid F, and an expansion bottle 2c. The circulation pump 2a may have any suitable configuration for transporting heat transfer fluid F, such as a suitable coolant, in the main thermal control circuit 2. The heat exchanger 2b may be configured as a radiator, or alternatively as a heat exchanger connected to a separate non-illustrated thermal control circuit or refrigerant circuit. The expansion bottle 2c may have any suitable configuration allowing the heat transfer fluid F to expand without causing the thermal management system S to fail. The expansion bottle 2c prevents the thermal management system S from being over-pressurised as the heat transfer fluid F heats up and expands. It should however be understood that the main thermal control circuit 2 may comprise any suitable components needed for cooling or heating the vehicle component 1 depending on the design and construction of the vehicle, and the shown components are only illustrating a possible system layout. In the embodiment shown in figure 3, the components of the main thermal control circuit 2 have been omitted, which is indicated with the dashed section of the thermal control circuit.

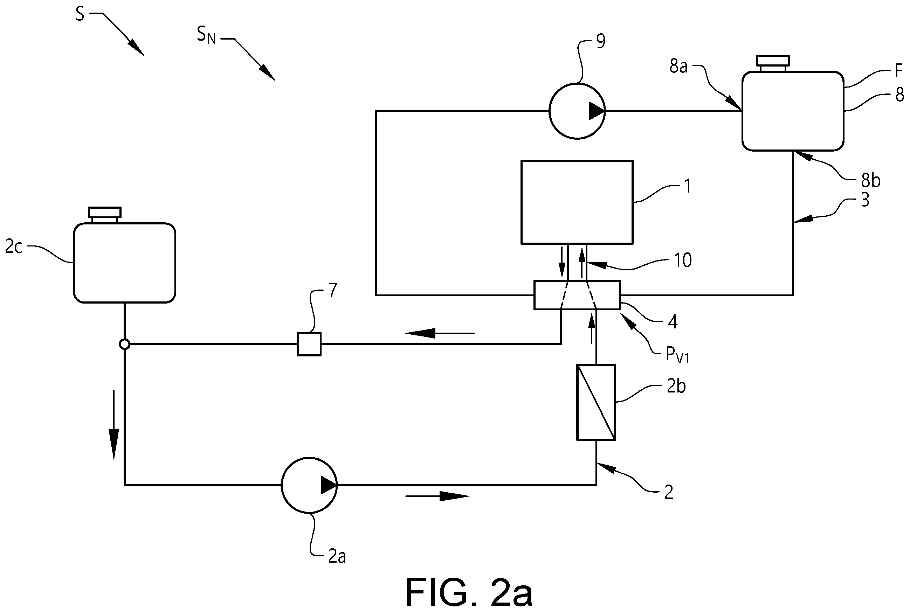

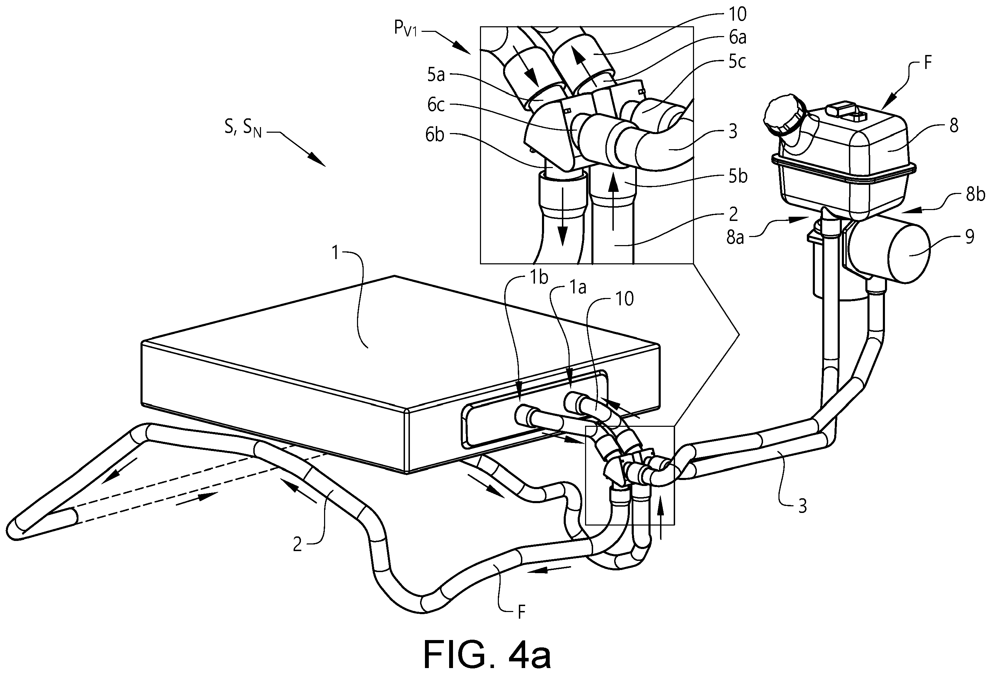

In normal operational conditions of the vehicle, the thermal management system S is operated in a normal operational state S_{N} by means of the main thermal control circuit 2 for cooling or heating the vehicle component 1, as shown in figures 2a and 4a. In the normal operational state S_{N}, the main thermal control circuit 2 is connected to the vehicle component 1 via the valve unit 4. In the normal operational state S_{N}, the heat transfer fluid F is allowed to circulate from the main thermal control circuit 2 to the vehicle component 1 via the valve unit 4. The components of the main thermal control circuit 2 are fluidly connected with conduits, pipes or other suitable connection means for transporting the heat transfer fluid F in the main thermal control circuit 2, transporting the heat transfer fluid F from the main thermal control circuit 2 to the vehicle component 1 via the valve unit 4, and transporting the heat transfer fluid F to the main thermal control circuit 2 from the vehicle component 1 via the valve unit 4. The main thermal control circuit 2 thus has the function to cool or heat the vehicle component 1 during normal operating and driving conditions of the vehicle, as will be further described below.

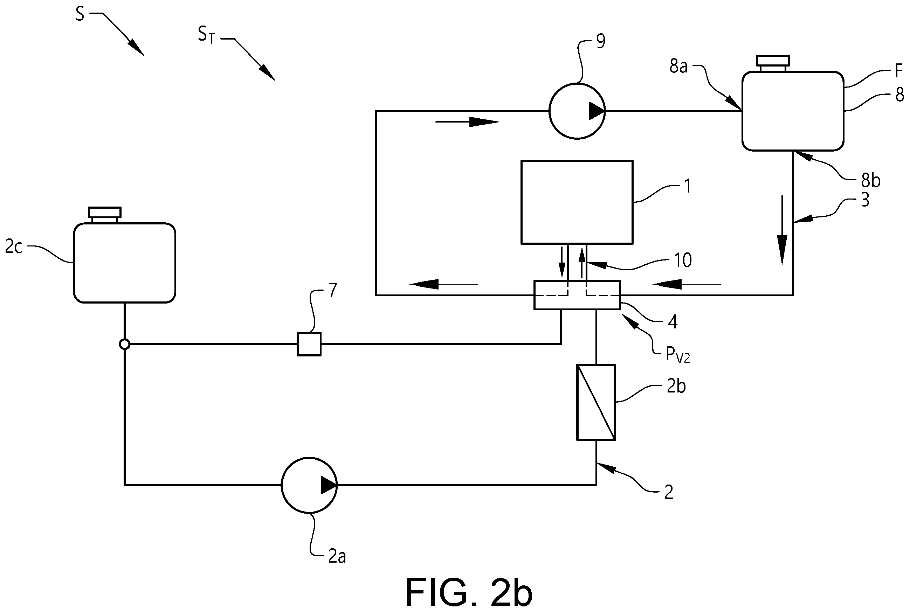

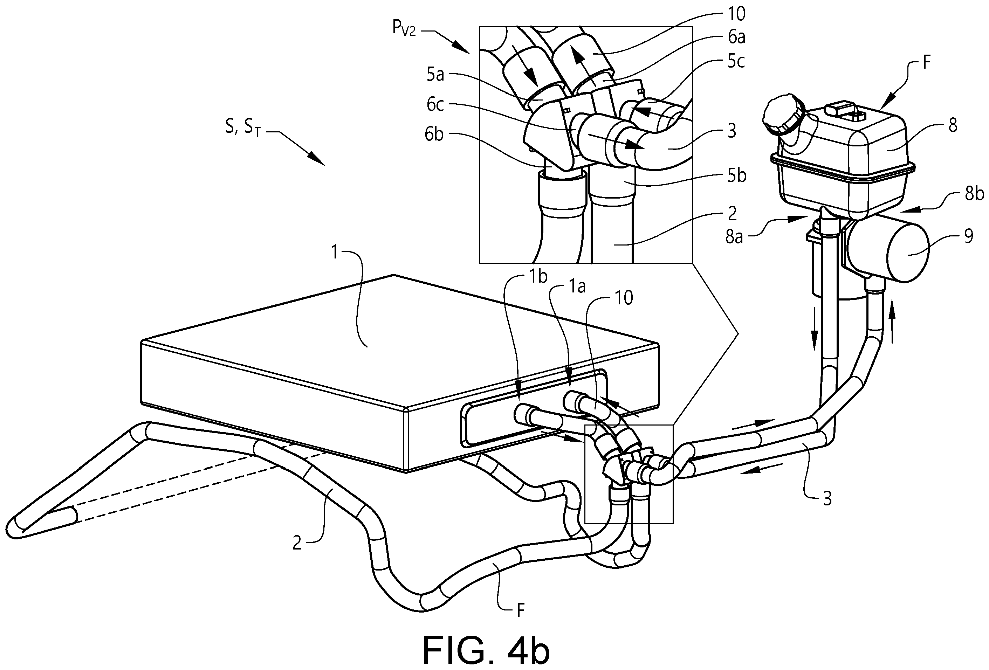

The thermal management system S is further configured for being operated in a temporary operational state S_{T} by means of the secondary thermal control circuit 3 upon detection of a cooling requirement or a heating requirement of the vehicle component 1. The temporary operational state S_{T} is schematically illustrated in figures 2b and 4b, and the thermal management system S is configured for activating the secondary thermal control circuit 3 for cooling or heating the vehicle component 1 in the temporary operational state S_{T}. The secondary thermal control circuit 3 is connected to the vehicle component 1 via the valve unit 4 in the temporary operational state S_{T}, and the secondary thermal control circuit 3 is when connected to the vehicle component 1 via the valve unit 4 in the temporary operational state S_{T} allowing the heat transfer fluid F to circulate from the secondary thermal control circuit 3 to the vehicle component 1 via the valve unit 4.

The detection of the cooling requirement or heating requirement may occur if the thermal management system S is detecting a need for boost cooling or heating the vehicle component 1, such as when the main thermal control circuit 2 is not capable of cooling or heating the vehicle component to a desired temperature level. The detection of the cooling requirement or heating requirement may further occur upon a malfunction of the main thermal control circuit 2. The thermal management system S suitably further comprises a non-illustrated control unit, and the control unit is steering and controlling the operation of the thermal management system S, such as shifting operational modes between the normal operational state S_{N} and the temporary operational state S_{T}, based on the cooling requirement or heating requirement.

The thermal management system S is configured for being operated in the temporary operational state S_{T} by means of the secondary thermal control circuit 3 upon a boost cooling or heating requirement of the vehicle component 1. A boost cooling or heating requirement occurs upon detection of inefficient cooling or inefficient heating of the vehicle component 1. The thermal management system is designed to act quickly upon a boost cooling or heating requirement of the vehicle component 1, and by using the secondary thermal control circuit 3, efficient cooling or heating of the vehicle component 1 is enabled.

The thermal management system S comprises at least one sensor 7 configured for detecting the boost cooling or heating requirement of the vehicle component 1. The at least one sensor 7 is a temperature sensor connected to the main thermal control circuit 2 or alternatively to the vehicle component 1. The system may comprise more than one sensor 7, such as for example one sensor connected to the main thermal control circuit and one sensor connected to the vehicle component 1 The at least one sensor 7 is configured to detect the boost cooling or heating requirement of the vehicle component 1 in order for the thermal management system S to change from the normal operational state S_{N} to the temporary operational state S_{T}. The at least one sensor 7 is configured for detecting the boost cooling or heating requirement of the vehicle component 1, and the system is designed to detect and quickly act upon the boost cooling or heating requirement of the vehicle component 1 by the at least one sensor 7. It should be understood that also the secondary thermal control circuit 3 may comprise temperature sensors.

The boost cooling or heating requirement may depend on different factors, such as vehicle system conditions or ambient conditions. In very cold climate conditions, it may be desired to heat the vehicle component 1 temporarily by using the boost heating functionality of the thermal management system S. The thermal management system S is then switching mode from the normal operational state S_{N} to the temporary operational state S_{T} for boost heating of the vehicle component 1 by means of the secondary thermal control circuit 3. The boost heating is enabled by the secondary thermal control circuit 3, without the need for engaging the main thermal control circuit 2. In hot load conditions, the system temperatures of the main thermal control circuit 2 may increase to above desired level for a limited period. It may then be desired to cool the vehicle component 1 temporarily by using the boost cooling functionality of the thermal management system S. The thermal management system S is then switching mode from the normal operational state S_{N} to the temporary operational state S_{T} for boost cooling of the vehicle component 1 by means of the secondary thermal control circuit 3. The boost cooling is enabled by the secondary thermal control circuit 3, without the need for engaging the main thermal control circuit 2. It should be understood that the temperature levels of the heat transfer fluid F in the secondary thermal control circuit 3 may be regulated for a desired boost heating or boost cooling functionality.

The thermal management system S is further configured for being operated in the temporary operational state S_{T} by means of the secondary thermal control circuit 3 upon a malfunction cooling requirement of the main thermal control circuit 2. The malfunction of the main thermal control circuit 2 is a leakage of heat transfer fluid F from the main thermal control circuit 2 or a blockage of heat transfer fluid F in the main thermal control circuit 2. A malfunction cooling requirement thus occurs upon a leakage or blockage of the main thermal control circuit 2, leading to inefficient cooling of the vehicle component 1. The thermal management system S is designed to act quickly upon a malfunctioning main thermal control circuit 2. By using the secondary thermal control circuit 3, efficient cooling of the vehicle component 1 is enabled.

The malfunction of the main thermal control circuit 2 is a leakage of heat transfer fluid F from the main thermal control circuit 2 or a blockage of heat transfer fluid F in the main thermal control circuit 2. A leakage of heat transfer fluid F from the main thermal control circuit 2 may for example occur if any of the conduits are leaking, if any of the connections between components and conduits are leaking, or if any of the components are leaking. A leakage may occur if a conduit, a connection, or a components bursts or cracks, or if a seal breaks. A blockage of heat transfer fluid F in the main thermal control circuit 2 is occurring if the flow of heat transfer fluid F is prevented from being transported, and may be caused by a malfunctioning component or if an object or contaminant is obstructing the flow path. A blockage of heat transfer fluid F in the main thermal control circuit 2 may also occur if power supply to a component is not working properly, such as in the case of a power outage or broken fuse. One specific example of blockage is if the power supply to the circulating pump 2a is prevented, which in turn is preventing the heat transfer fluid F from being transported in the main thermal control circuit 2.

As described above, the thermal management system S comprises at least one sensor 7, as shown in for example figure 1. In this embodiment, the at least one sensor 7 is arranged for detecting the malfunction cooling requirement of the main thermal control circuit 2. The sensor 7 is thus configured for detecting the malfunction of the main thermal control circuit 2. The at least one sensor 7 for detecting the malfunction of the main thermal control circuit 2 is suitably a pressure sensor, a temperature sensor and/or a flow sensor connected to the main thermal control circuit 2, and the at least one sensor 7 is arranged for detecting the leakage or blockage of the main thermal control circuit 2. When the malfunction occurs, the at least one sensor 7 is detecting the malfunction in order for the thermal management system S to change from the normal operational state S_{N} to the temporary operational state S_{T}. The system is designed to detect and quickly act upon a leakage or blockage of the main thermal control circuit 2 by the at least one sensor 7. A combination of different types of sensors may be used in the main thermal control circuit 2 for an efficient and fast detection of the malfunction.

It should be understood that the sensor 7 configured for detecting the malfunction of the main thermal control circuit 2 may be the same temperature sensor 7 used for detecting the boost cooling or heating requirement. Alternatively, the sensor 7 configured for detecting the malfunction of the main thermal control circuit 2 may be a separately arranged sensor.

As shown in for example figures 2b and 4b, the secondary thermal control circuit 3 comprises a storage unit 8 configured for holding a volume of the heat transfer fluid F. The volume of heat transfer fluid F is arranged as a thermal buffer for cooling or heating the vehicle component 1 in the temporary operational state S_{T}. The storage unit 8 is used as a flow through volume for the heat transfer fluid F. The storage unit 8 comprises a flow inlet 8a and a flow outlet 8b. The heat transfer fluid F is in the temporary operational state S_{T} flowing into the storage unit 8 via the flow inlet 8a and out from the storage unit 8 via the flow outlet 8b. The temperature of the heat transfer fluid F in the storage unit 8 may as an example be kept at ambient temperature if the storage unit 8 is placed at a suitable location within the vehicle, and during a certain time period, the volume of heat transfer fluid F in the storage unit 8 acts as a thermal buffer up to a specific cooling or heating temperature of the vehicle component 1. The storage unit 8 may be cooled with suitable cooling means, or alternatively heated with suitable heating means.

If, as an example, a malfunction of the main thermal control circuit 2 occurs, a user of the vehicle should have enough time to take action when the secondary thermal control circuit 3 is activated in the temporary operational state S_{T}. The thermal management system S is therefore suitably designed with a volume of heat transfer fluid F in the storage unit 8 and a flow rate of heat transfer fluid F in the secondary thermal control circuit 3 to allow the user to take action and drive the vehicle to a safe location. As a non-limiting example, a realistic reaction time for a user may be at least 2 to 4 minutes, allowing the user to stop safely in most driving scenarios.

The secondary thermal control circuit 3 further comprises a pump 9 for circulating heat transfer fluid F in the secondary thermal control circuit 3 to the vehicle component 1 and through the storage unit 8 in the temporary operational state S_{T}. The thermal management system S is configured for activating the pump 9 upon detection of the cooling requirement or heating requirement of the vehicle component 1. The pump 9 may have any suitable configuration for transporting heat transfer fluid F, and the flow rate of heat transfer fluid F from the pump may be determined depending on for example the volume of heat transfer fluid in the storage unit 8, the temperature of the heat transfer fluid in the storage unit 8, and the temperature of the vehicle component 1. The pump 9 may be arranged in the flow path of the secondary thermal control circuit 3 before or after the storage unit 8 depending on the design of the thermal management system S. The pump 9 may further be arranged in connection to the storage unit 8 as shown in the embodiment illustrated in figure 3. In alternative non-illustrated embodiments, the pump 9 may be arranged within the storage unit 8, or be structurally integrated with the storage unit 8.

In the temporary operational state S_{T}, the secondary thermal control circuit 3 is connected to the vehicle component 1 via the valve unit 4, as illustrated in for example figures 2b and 4b. In the temporary operational state S_{T}, the heat transfer fluid F is allowed to circulate from the secondary thermal control circuit 3 to the vehicle component 1 via the valve unit 4. The components of the secondary thermal control circuit 3, such as the storage unit 8 and the pump 9, are fluidly connected with conduits, pipes or other suitable connection means for transporting the heat transfer fluid F in the secondary thermal control circuit 3, transporting the heat transfer fluid F from the secondary thermal control circuit 3 to the vehicle component 1 via the valve unit 4, and transporting the heat transfer fluid F to the secondary thermal control circuit 3 from the vehicle component 1 via the valve unit 4.

As described above, the thermal management system S suitably further comprises the non-illustrated control unit, and the control unit is steering and controlling the operation of the components and circuits of the thermal management system S, such as the pump 9 and the valve 4, based on the cooling requirement or heating requirement.

The valve unit 4 is adapted to disconnect the secondary thermal control circuit 3 from fluid communication with the vehicle component 1 in the normal operational state S_{N}, and to disconnect the main thermal control circuit 2 from fluid communication with the vehicle component 1 in the temporary operational state S_{T}. When the main thermal control circuit 2 is connected to and in fluid communication with the vehicle component 1 in the normal operational state S_{N}, the secondary thermal control circuit 3 is prevented from being in fluid communication with the vehicle component 1 by the valve unit 4. In this way, the main thermal control circuit 2 and the vehicle component 1 are forming a closed thermal control circuit that is separated from the secondary thermal control circuit 3 in the normal operational state S_{N}. When the secondary thermal control circuit 3 is connected to and in fluid communication with the vehicle component 1 in the temporary operational state S_{T}, the main thermal control circuit 2 is prevented from being in fluid communication with the vehicle component 1 by the valve unit 4. In this way, the secondary thermal control circuit 3 and the vehicle component 1 are forming a closed thermal control circuit that is separated from the main thermal control circuit 2 in the temporary operational state S_{T}. With this valve configuration, the main thermal control circuit 2 is fully separated from the secondary thermal control circuit 3 by the valve unit 4 in the normal operational state S_{N}, and the secondary thermal control circuit 3 is fully separated from the main thermal control circuit 2 by the valve unit 4 in the temporary operational state S_{T}.

As shown in for example figures 1 and 3, the thermal management system S comprises a further thermal control circuit 10 connected to the vehicle component 1 and to the valve unit 4. Each one of the main thermal control circuit 2 and the secondary thermal control circuit 3 is connectable to the vehicle component 1 via the valve unit 4 and the further thermal control circuit 10. The further thermal control circuit 10 is arranged for transporting heat transfer fluid F to the vehicle component 1 from the valve unit 4 and from the vehicle component 1 to the valve unit 4 in the normal operational state S_{N} and the temporary operational state S_{T}, as indicated with arrows in figures 2a-b, 4a-b, and 7a-b. As understood from the figures, the further thermal control circuit 10 is formed by conduits, pipes or other suitable connection means for transporting the heat transfer fluid F from the valve unit 4 to the vehicle component 1, and transporting the heat transfer fluid F from the vehicle component 1 to the valve unit 4. The vehicle component 1 suitably comprises non-illustrated flow channels or similar arrangements for cooling or heating the vehicle component 1 with the heat transfer fluid F. In the illustrated embodiment, the vehicle component 1 comprises an inlet port 1a and an outlet port 1b connected to the further thermal control circuit 10, and the flow channels or similar arrangements of the vehicle component 1 are connected to the inlet port 1a and outlet port 1b for enabling a flow of heat transfer fluid F through the vehicle component 1.

The valve unit may 4 have any suitable configuration for controlling the flow of heat transfer fluid F to and from the vehicle component 1. As shown in the embodiments illustrated in figures 1, 3, 4a-b, and 7a-b, the valve unit 4 comprises a first outlet flow port 6a and a first inlet flow port 5a connected to the vehicle component 1. The valve unit 4 further comprises a second inlet flow port 5b and a second outlet flow port 6b connected to the main thermal control circuit 2, and a third inlet flow port 5c and a third outlet flow port 6c connected to the secondary thermal control circuit 3.

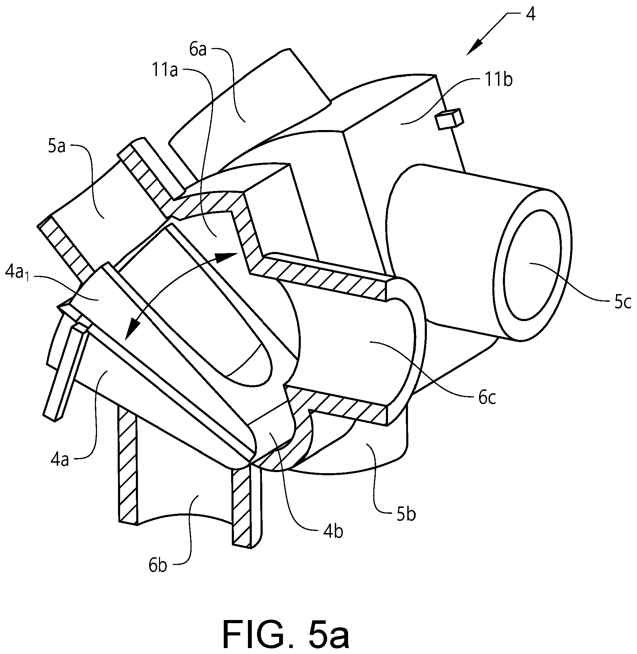

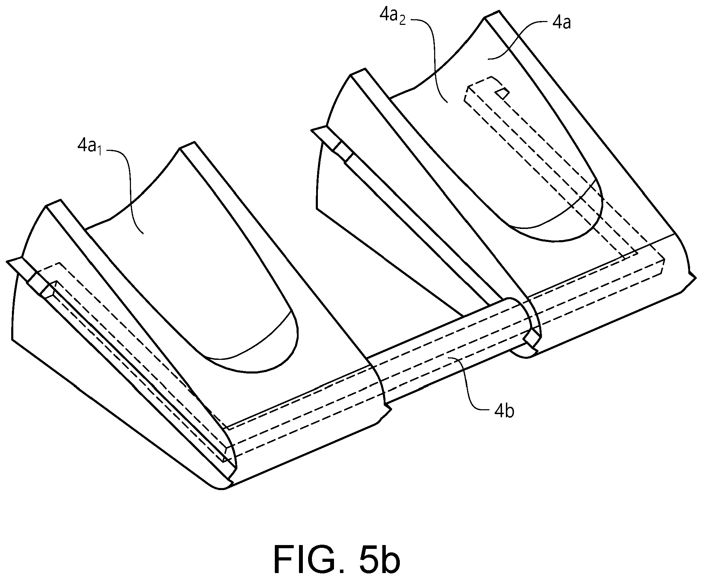

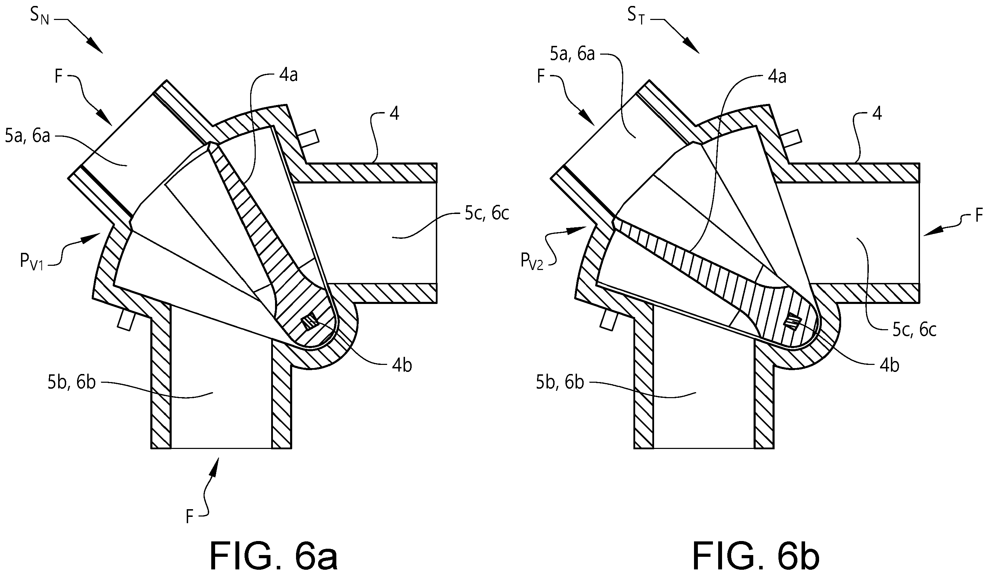

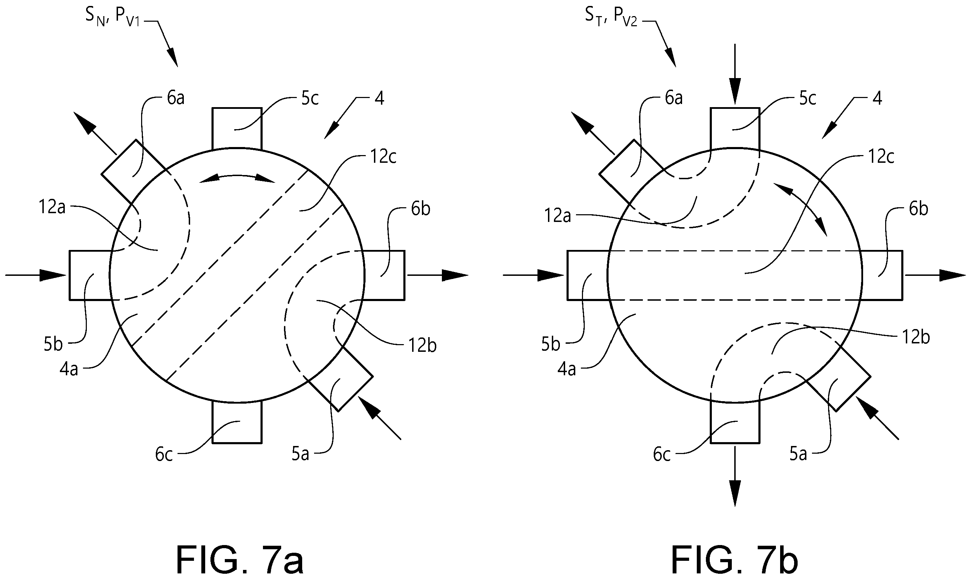

The valve unit 4 comprises a valve body 4a, as shown in the embodiments illustrated in figures 5a-b, 6a-b, and 7a-b. The valve body 4a is in the normal operational state S_{N} arranged in a first valve position P_{V1}, as shown in figures 6a and 7a. In the first valve position P_{V1}, the second inlet flow port 5b is in fluid communication with the first outlet flow port 6a and the second outlet flow port 6b is in fluid communication with the first inlet flow port 5a. The first valve position P_{V1} is enabling a circulating flow of heat transfer fluid from the main thermal control circuit 2 to the vehicle component 1 via the valve unit 4 and from the vehicle component 1 to the main thermal control circuit 2, as indicated with arrows in figures 2a, 4a, and 7a. In the first valve position P_{V1}, the valve body 4a is blocking fluid communication between the third inlet flow port 5c and the first outlet flow port 6a and blocking fluid communication between the third outlet flow port 6c and the first inlet flow port 5a. In this way, flow from the secondary thermal control circuit 3 to the vehicle component 1 is prevented.

The valve body 4a is in the temporary operational state S_{T} is arranged in a second valve position P_{V2}, as shown in figures 6b and 7b. In the second valve position P_{V2}, the third inlet flow port 5c is in fluid communication with the first outlet flow port 6a and the third outlet flow port 6c is in fluid communication with the first inlet flow port 5a. The second valve position P_{V2} is enabling a circulating flow of heat transfer fluid from the secondary thermal control circuit 3 to the vehicle component 1 via the valve unit 4 and from the vehicle component 1 to the secondary thermal control circuit 3, as indicated with arrows in figures 2b, 4b, and 7b. In the second valve position P_{V2}, the valve body 4a is blocking fluid communication between the second inlet flow port 5b and the first outlet flow port 6a and blocking fluid communication between the second outlet flow port 6b and the first inlet flow port 5a. In this way, flow from the main thermal control circuit 2 to the vehicle component 1 is prevented.

The valve body 4a of the valve unit 4 is suitably connected to a non-illustrated actuator or similar device for displacing the valve body 4a between the first valve position P_{V1} and the second valve position P_{V2}. The actuator may be arranged as an electric motor, stepper motor, or other suitable actuating device.

The valve body 4a may be constructed with a flap configuration, where the valve body 4a is configured for pivoting around a shaft structure 4b upon displacement between the first valve position P_{V1} and the second valve position P_{V2}. Alternatively, the valve body 4a may have a rotating configuration, where the valve body is configured for rotational movement upon displacement between the first valve position P_{V1} and the second valve position P_{V2}.

The valve unit 4 of the embodiment illustrated in figures 5a-b and 6a-b has a valve body with a flap configuration, and the valve unit 4 comprises a first chamber 11a and a second chamber 11b, as shown in figure 5a. The first chamber 11a and the second chamber 11b are separated from each other and there is thus no fluid transport between the chambers. The first chamber 11a is in fluid communication with the first inlet flow port 5a, second outlet flow port 6b, and third outlet flow port 6c. The second chamber 11b is in fluid communication with the second inlet flow port 5b, third inlet flow port 5c, and first outlet flow port 6a.

In the embodiment shown in figures 5a-b and 6a-b, the valve body 4a has a dual flap configuration with a first valve flap 4a₁ and a second valve flap 4a₂. The first valve flap 4a, and a second valve flap 4a₂ are connected to each other via a shaft structure 4b, and the valve body 4a with the valve flaps is pivoting around the shaft structure 4b upon displacement between the first valve position P_{V1} and second valve position P_{V2}.

In the first valve position P_{V1} the valve body 4a is arranged in a first angular position, and in the second valve position P_{V2} the valve body 4a is arranged in a second angular position, as understood from figures 6a-b. As an example, the angular difference of the valve body 4a between the first valve position P_{V1} and the second valve position P_{V2} may be in the range 10-180°, preferably in the range 20-45°.

The valve unit 4 is arranged in the first valve position P_{V1} as shown in figure 6a in the normal operational state S_{N} during normal operation conditions of the vehicle. Upon detection of the cooling requirement or heating requirement of the vehicle component 1, the secondary thermal control circuit 3 is activated for cooling the vehicle component 1 in the temporary operational state S_{T}. The actuator is used for actively shift position from the first valve position P_{V1} to the second valve position P_{V2}. The actuator is thus operating the valve unit 4 to connect the secondary thermal control circuit 3 into fluid communication with the vehicle component 1 and disconnect the main thermal control circuit 2 from fluid communication with the vehicle component 1.

In an alternative embodiment, the valve unit 4 illustrated in figures 5a-b and 6a-b is configured as a pressure operated passive valve, where the valve body 4a is arranged as a flap member operated by fluid pressure. This configuration, where the valve unit is constructed without an actuator is suitable if the thermal management system S is designed without the boost cooling or heating functionality, and only comprises the detection of a malfunction of the main thermal control circuit 2. Fluid pressure from circulated heat transfer fluid F in the secondary thermal control circuit 3 is operating the valve unit 4 to connect the secondary thermal control circuit 3 into fluid communication with the vehicle component 1 and disconnect the main thermal control circuit 2 from fluid communication with the vehicle component 1. The pressure from circulated heat transfer fluid F in the secondary thermal control circuit 3 is established by operating the pump 9 and the established pressure in the secondary thermal control circuit 3 is forcing the valve body 4a of the valve unit 4 to shift position from the first valve position P_{V1} to the second valve position P_{V2}. It should be understood that the pressure in the main thermal control circuit 2 upon malfunction may decrease due to the occurred leakage or blockage, and a higher pressure in the secondary thermal control circuit 3 than in the main thermal control circuit 2 is forcing the valve body 4a to shift from the first valve position P_{V1} to the second valve position P_{V2}. Upon malfunction of the main thermal control circuit 2, for example if a blockage occurs, the circulation pump 2a may be shut off to reduce pressure in the main thermal control circuit 2.

In the embodiment illustrated in figures 7a-b, the valve unit 4 is arranged with a valve body 4a having a rotating configuration, where the valve body is rotated between the first valve position P_{V1} and the second valve position P_{V2}, as understood from the figures. The valve body 4a comprises a first flow channel 12a, a second flow channel 12b, and a third flow channel 12c, arranged for fluidly connecting the inlet and outlet flow ports of the valve unit 4.

The valve body 4a is in the normal operational state S_{N} arranged in the first valve position P_{V1}, as shown in figure 7a. In the first valve position P_{V1}, the second inlet flow port 5b is in fluid communication with the first outlet flow port 6a via the first flow channel 12a, and the second outlet flow port 6b is in fluid communication with the first inlet flow port 5a via the second flow channel 12b. The first valve position P_{V1} is enabling a circulating flow of heat transfer fluid from the main thermal control circuit 2 to the vehicle component 1 via the valve unit 4 and from the vehicle component 1 to the main thermal control circuit 2, as indicated with arrows in figure 7a. In the first valve position P_{V1}, the valve body 4a is blocking fluid communication between the third inlet flow port 5c and the first outlet flow port 6a and blocking fluid communication between the third outlet flow port 6c and the first inlet flow port 5a. In this way, flow from the secondary thermal control circuit 3 to the vehicle component 1 is prevented. In the first valve position PV1, the third flow channel 12c is blocked from fluid communication, as shown in figure 7a.

The valve body 4a is in the temporary operational state S_{T} is arranged in a second valve position P_{V2}, as shown in figure 7b. In the second valve position P_{V2}, the third inlet flow port 5c is in fluid communication with the first outlet flow port 6a via the first flow channel 12a, and the third outlet flow port 6c is in fluid communication with the first inlet flow port 5a via the second flow channel 12b. The second valve position P_{V2} is enabling a circulating flow of heat transfer fluid from the secondary thermal control circuit 3 to the vehicle component 1 via the valve unit 4 and from the vehicle component 1 to the secondary thermal control circuit 3, as indicated with arrows in figure 7b. In the second valve position P_{V2}, the valve body 4a is blocking fluid communication between the second inlet flow port 5b and the first outlet flow port 6a and blocking fluid communication between the second outlet flow port 6b and the first inlet flow port 5a. In this way, flow from the main thermal control circuit 2 to the vehicle component 1 is prevented. However, with this valve configuration, the second inlet flow port 5b is in fluid communication with the second outlet flow port 6b via the third flow channel 12c. The second valve position P_{V2} is in this way enabling a circulating flow in the main thermal control circuit 2 during boost cooling or boost heating operations, as indicated with arrows in figure 7b.

The valve unit may have other configurations than the ones described. The valve body may instead be arranged as a sliding valve body that is allowing or blocking fluid transportation through the chambers. The valve unit may be arranged with two valves instead of one valve body with two chambers, where each of the two valves is provided with one chamber. The valve unit or valve units may be actuated with fluid pressure or by an actuator, such as an electric motor, stepper motor, or other suitable actuating device. In other alternative embodiments, the valve unit or valve units may be arranged as magnetic flow valves activated through supply of electric current.

When operating the thermal management system S in the normal operational state S_{N} the main thermal control circuit 2 is cooling or heating the vehicle component 1, as shown in figures 2a and 4a, and the secondary thermal control circuit 3 is disconnected from the vehicle component 1. In the normal operational state S_{N}, the main thermal control circuit 2 is arranged in fluid communication with the vehicle component 1 via the valve unit 4, and the secondary thermal control circuit 3 is disconnected from fluid communication with the vehicle component 1 by the valve unit 4.

With the configurations of the valve unit 4 illustrated in figures 5a-b, 6a-b and 7a-b, the valve body 4a is arranged in a first valve position P_{V1} in the normal operational state S_{N}, and in the first valve position P_{V1} the second inlet flow port 5b is in fluid communication with the first outlet flow port 6a and the second outlet flow port 6b is in fluid communication with the first inlet flow port 5a. In the first valve position P_{V1}, the fluid communication between the third inlet flow port 5c and the first outlet flow port 6a is blocked by the valve unit 4 and the fluid communication between the third outlet flow port 6c and the first inlet flow port 5a is blocked by the valve body 4a. The valve unit 4 is fully separating the main thermal control circuit 2 from the secondary thermal control circuit 3 in the normal operational state S_{N}.

When a cooling requirement or heating requirement of the vehicle component 1 occurs, the cooling requirement or heating requirement of the vehicle component 1 is detected by the at least one sensor 7. Upon detection of the cooling requirement or heating requirement by the at least one sensor 7, the thermal management system S is changing from the normal operational state S_{N} to the temporary operational state S_{T}, as shown in figures 2b and 4b. When changing from the normal operational state S_{N} to the temporary operational state S_{T}, the secondary thermal control circuit 3 is instead cooling or heating the vehicle component 1, and the main thermal control circuit 2 is disconnected from the vehicle component 1. Thus, in the temporary operational state S_{T}, the secondary thermal control circuit 3 is arranged in fluid communication with the vehicle component 1 via the valve unit 4, and the secondary thermal control circuit 3 is activated for cooling or heating the vehicle component 1. The activation of the secondary thermal control circuit 3 includes activation of the pump 9 for circulating heat transfer fluid F in the secondary thermal control circuit 3 to the vehicle component 1 and through the storage unit 8. The pump 9 is in this way activated upon detection of the cooling requirement or heating requirement of the vehicle component 1. The stored volume of heat transfer fluid F in the storage volume 8 is arranged as a thermal buffer for cooling or heating the vehicle component 1 in the temporary operational state S_{T}, and the heat transfer fluid F in the storage volume 8 is drawn into the conduits of the secondary thermal control circuit 3 and transported to the vehicle component 1 for cooling or heating the vehicle component 1. Further, in the temporary operational state S_{T}, the main thermal control circuit 2 is disconnected from fluid communication with the vehicle component 1 by the valve unit 4. With the configurations of the valve unit 4 illustrated in figures 5a-b, 6a-b and 7a-b, the valve body 4a is arranged in the second valve position P_{V2} in the temporary operational state S_{T}, and in the second valve position P_{V2} the third inlet flow port 5c is in fluid communication with the first outlet flow port 6a and the third outlet flow port 6c is in fluid communication with the first inlet flow port 5a. In the second valve position P_{V2}, the fluid communication between the second inlet flow port 5b and the first outlet flow port 6a is blocked by the valve unit 4 and the fluid communication between the second outlet flow port 6b and the first inlet flow port 5a is blocked by the valve body 4a. The valve unit 4 is fully separating the secondary thermal control circuit 3 from the main thermal control circuit 2 in the temporary operational state S_{T}.

As described above, the valve unit 4 is configured as an actuator operated active valve or a pressure operated passive valve, and the valve unit 4 is operated by the actuator or pressure from circulated heat transfer fluid F in the secondary thermal control circuit 3, upon activation of the secondary thermal control circuit 3 for cooling or heating the vehicle component 1 in the temporary operational state S_{T}. In this way, the valve unit 4 is connecting the secondary thermal control circuit 3 into fluid communication with the vehicle component 1 and disconnecting the main thermal control circuit 2 from fluid communication with the vehicle component 1.

It will be appreciated that the above description is merely exemplary in nature and is not intended to limit the present invention, its application or uses. While specific examples have been described in the specification and illustrated in the drawings, it will be understood by those of ordinary skill in the art that various changes may be made and equivalents may be substituted for elements thereof without departing from the scope of the present invention as defined in the claims. Furthermore, modifications may be made to adapt a particular situation or material to the teachings of the present disclosure without departing from the essential scope thereof. Therefore, it is intended that the present invention not be limited to the particular examples illustrated by the drawings and described in the specification as the best mode presently contemplated for carrying out the teachings of the present invention, but that the scope of the present invention is defined by the appended claims. Reference signs mentioned in the claims should not be seen as limiting the extent of the matter protected by the claims, and their sole function is to make claims easier to understand.

### REFERENCE SIGNS

- 1:: Vehicle component
- 1a:: Inlet port
- 1b:: Outlet port
- 2:: Main thermal control circuit
- 2a:: Circulation pump
- 2b:: Heat exchanger
- 2c:: Expansion bottle
- 3:: Secondary thermal control circuit
- 4:: Valve unit
- 4a:: Valve body
- 4a₁:: First valve flap
- 4a₂:: Second valve flap
- 4b:: Shaft structure
- 5a:: First inlet flow port
- 5b:: Second inlet flow port
- 5c:: Third inlet flow port
- 6a:: First outlet flow port
- 6b:: Second outlet flow port
- 6c:: Third outlet flow port
- 7:: Sensor
- 8:: Storage unit
- 8a:: Flow inlet
- 8b:: Flow outlet
- 9:: Pump
- 10:: Further thermal control circuit
- 11a:: First chamber
- 11b:: Second chamber
- 12a:: First flow channel
- 12b:: Second flow channel
- 12c:: Third flow channel

- F:: Heat transfer fluid
- S:: Thermal management system
- P_{V1}:: First valve position
- P_{V2}:: Second valve position
- S_{N}:: Normal operational state
- S_{T}:: Temporary operational state

## Claims

1. A thermal management system (S) for cooling or heating a vehicle component (1), wherein the thermal management system (S) comprises a main thermal control circuit (2) connected to the vehicle component (1) and a secondary thermal control circuit (3) connected to the vehicle component (1),
wherein the thermal management system (S) is configured for being operated in a normal operational state (S_{N}) by means of the main thermal control circuit (2), or in a temporary operational state (S_{T}) by means of the secondary thermal control circuit (3),
wherein the thermal management system (S) comprises a valve unit (4), wherein the main thermal control circuit (2) is connected to the vehicle component (1) via the valve unit (4) in the normal operational state (S_{N}), and wherein the secondary thermal control circuit (3) is temporarily connected to the vehicle component (1) via the valve unit (4) in the temporary operational state (S_{T}) upon detection of a cooling requirement or a heating requirement of the vehicle component (1),
wherein the thermal management system (S) is configured for temporarily activating the secondary thermal control circuit (3) for cooling or heating the vehicle component (1) in the temporary operational state (S_{T}),
wherein the valve unit (4) comprises a first outlet flow port (6a) and a first inlet flow port (5a) connected to the vehicle component (1), wherein the valve unit (4) comprises a second inlet flow port (5b) and a second outlet flow port (6b) connected to the main thermal control circuit (2), and wherein the valve unit (4) comprises a third inlet flow port (5c) and a third outlet flow port (6c) connected to the secondary thermal control circuit (3).

2. The thermal management system (S) according to claim 1,
wherein the thermal management system (S) is configured for being operated in the temporary operational state (S_{T}) by means of the secondary thermal control circuit (3) upon a boost cooling or heating requirement of the vehicle component (1).

3. The thermal management system (S) according to claim 2,
wherein the thermal management system (S) comprises at least one sensor (7) configured for detecting the boost cooling or heating requirement of the vehicle component (1), wherein the at least one sensor (7) is a temperature sensor connected to the main thermal control circuit (2) and/or the vehicle component (1).

4. The thermal management system (S) according to any of claims 1 to 3,
wherein the thermal management system (S) is configured for being operated in the temporary operational state (S_{T}) by means of the secondary thermal control circuit (3) upon a malfunction cooling requirement of the main thermal control circuit (2), wherein the malfunction of the main thermal control circuit (2) is a leakage of heat transfer fluid (F) from the main thermal control circuit (2) or a blockage of heat transfer fluid (F) in the main thermal control circuit (2).

5. The thermal management system (S) according to claim 4,
wherein the thermal management system (S) comprises at least one sensor (7) configured for detecting the malfunction cooling requirement of the main thermal control circuit (2), wherein the at least one sensor (7) is a pressure sensor, a temperature sensor and/or a flow sensor connected to the main thermal control circuit (2), wherein the at least one sensor (7) is configured for detecting the leakage or blockage of the main thermal control circuit (2).

6. The thermal management system (S) according to any preceding claim,
wherein the valve unit (4) is adapted to disconnect the secondary thermal control circuit (3) from fluid communication with the vehicle component (1) in the normal operational state (S_{N}), and wherein the valve unit (4) is adapted to disconnect the main thermal control circuit (2) from fluid communication with the vehicle component (1) in the temporary operational state (S_{T}).

7. The thermal management system (S) according to any preceding claim,
wherein the thermal management system (S) comprises a further thermal control circuit (10) connected to the vehicle component (1) and to the valve unit (4), wherein each one of the main thermal control circuit (2) and the secondary thermal control circuit (3) is connectable to the vehicle component (1) via the valve unit (4) and the further thermal control circuit (10).

8. The thermal management system (S) according to any preceding claim,
wherein the valve unit (4) comprises a valve body (4a), wherein the valve body (4a) in the normal operational state (S_{N}) is arranged in a first valve position (P_{V1}) and wherein the valve body (4a) in the temporary operational state (S_{T}) is arranged in a second valve position (P_{V2}),
wherein in the first valve position (P_{V1}) the second inlet flow port (5b) is in fluid communication with the first outlet flow port (6a) and the second outlet flow port (6b) is in fluid communication with the first inlet flow port (5a),
wherein in the second valve position (P_{V2}) the third inlet flow port (5c) is in fluid communication with the first outlet flow port (6a) and the third outlet flow port (6c) is in fluid communication with the first inlet flow port (5a).

9. The thermal management system (S) according to claim 8,
wherein in the first valve position (P_{V1}) the valve body (4a) is blocking fluid communication between the third inlet flow port (5c) and the first outlet flow port (6a) and blocking fluid communication between the third outlet flow port (6c) and the first inlet flow port (5a),
wherein in the second valve position (P_{V2}) the valve body (4a) is blocking fluid communication between the second inlet flow port (5b) and the first outlet flow port (6a) and blocking fluid communication between the second outlet flow port (6b) and the first inlet flow port (5a).

10. The thermal management system (S) according to any preceding claim,
wherein the secondary thermal control circuit (3) comprises a storage unit (8) configured for holding a volume of heat transfer fluid (F), wherein the volume of heat transfer fluid (F) is arranged as a thermal buffer for cooling or heating the vehicle component (1) in the temporary operational state (S_{T}).

11. The thermal management system (S) according to claim 10,
wherein the secondary thermal control circuit (3) comprises a pump (9) for circulating heat transfer fluid (F) in the secondary thermal control circuit (3) to the vehicle component (1) and through the storage unit (8) in the temporary operational state (S_{T}), wherein the thermal management system (S) is configured for activating the pump (9) upon detection of the cooling requirement or the heating requirement of the vehicle component (1).

12. The thermal management system (S) according to any preceding claim,
wherein in the normal operational state (S_{N}) the main thermal control circuit (2) is fully separated from the secondary thermal control circuit (3) by the valve unit (4), and wherein in the temporary operational state (S_{T}) the secondary thermal control circuit (3) is fully separated from the main thermal control circuit (2) by the valve unit (4).

13. A method for operating a thermal management system (S) for cooling or heating a vehicle component (1), wherein the thermal management system (S) comprises a main thermal control circuit (2) connected to the vehicle component (1), a secondary thermal control circuit (3) connected to the vehicle component (1), and a valve unit (4),
wherein the valve unit (4) comprises a first outlet flow port (6a) and a first inlet flow port (5a) connected to the vehicle component (1), wherein the valve unit (4) comprises a second inlet flow port (5b) and a second outlet flow port (6b) connected to the main thermal control circuit (2), wherein the valve unit (4) comprises a third inlet flow port (5c) and a third outlet flow port (6c) connected to the secondary thermal control circuit (3), wherein the valve unit (4) comprises a valve body (4a),
wherein the thermal management system (S) is operated in a normal operational state (S_{N}) by means of the main thermal control circuit (2), or in a temporary operational state (S_{T}) by means of the secondary thermal control circuit (3), wherein the method comprises the steps:
arranging the main thermal control circuit (2) in fluid communication with the vehicle component (1) via the valve unit (4) in the normal operational state (S_{N});
arranging the secondary thermal control circuit (3) temporarily in fluid communication with the vehicle component (1) via the valve unit (4) in the temporary operational state (S_{T}) upon detection of a cooling requirement or a heating requirement of the vehicle component (1), and temporarily activating the secondary thermal control circuit (3) for cooling or heating the vehicle component (1) in the temporary operational state (S_{T});
arranging the valve body (4a) in a first valve position (P_{V1}) in the normal operational state (S_{N}), wherein in the first valve position (P_{V1}) the second inlet flow port (5b) is in fluid communication with the first outlet flow port (6a) and the second outlet flow port (6b) is in fluid communication with the first inlet flow port (5a);
arranging the valve body (4a) in a second valve position (P_{V2}) in the temporary operational state (S_{T}), wherein in the second valve position (P_{V2}) the third inlet flow port (5c) is in fluid communication with the first outlet flow port (6a) and the third outlet flow port (6c) is in fluid communication with the first inlet flow port (5a).

14. The method according to claim 13,
wherein the method further comprises the step: operating the thermal management system (S) in the temporary operational state (S_{T}) by means of the secondary thermal control circuit (3) upon a boost cooling or heating requirement of the vehicle component (1).

15. The method according to claim 14,
wherein the thermal management system (S) comprises at least one sensor (7), wherein the at least one sensor (7) is a temperature sensor connected to the main thermal control circuit (2) and/or the vehicle component (1), wherein the method further comprises the step: detecting the boost cooling or heating requirement of the vehicle component (1) by the at least one sensor (7).

16. The method according to any of claims 13 to 15,
wherein the method further comprises the step: operating the thermal management system (S) in the temporary operational state (S_{T}) by means of the secondary thermal control circuit (3) upon a malfunction cooling requirement of the main thermal control circuit (2), wherein the malfunction of the main thermal control circuit (2) is a leakage of heat transfer fluid (F) from the main thermal control circuit (2) or a blockage of heat transfer fluid (F) in the main thermal control circuit (2).

17. The method according to claim 16,
wherein the thermal management system (S) comprises at least one sensor (7), wherein the at least one sensor (7) is a pressure sensor, a temperature sensor and/or a flow sensor connected to the main thermal control circuit (2), wherein the method further comprises the step: detecting the leakage or blockage of the main thermal control circuit (2) by the at least one sensor (7).

18. The method according to any of claims 13 to 17,
wherein the method further comprises the steps: disconnecting the secondary thermal control circuit (3) from fluid communication with the vehicle component (1) by the valve unit (4) in the normal operational state (S_{N});
disconnecting the main thermal control circuit (2) from fluid communication with the vehicle component (1) by the valve unit (4) in the temporary operational state (S_{T}).

19. The method according to any of claims 13 to 18,
wherein the method further comprises the steps: blocking fluid communication between the third inlet flow port (5c) and the first outlet flow port (6a) and blocking fluid communication between the third outlet flow port (6c) and the first inlet flow port (5a) by the valve body (4a) in the first valve position (P_{V1});
blocking fluid communication between the second inlet flow port (5b) and the first outlet flow port (6a) and blocking fluid communication between the second outlet flow port (6b) and the first inlet flow port (5a) by the valve body (4a) in the second valve position (P_{V2}).

20. The method according to any of claims 13 to 19,
wherein the secondary thermal control circuit (3) comprises a storage unit (8) configured for holding a volume of heat transfer fluid (F), wherein the volume of heat transfer fluid (F) is arranged as a thermal buffer for cooling or heating the vehicle component (1) in the temporary operational state (S_{T}), wherein the secondary thermal control circuit (3) comprises a pump (9) for circulating heat transfer fluid (F) in the secondary thermal control circuit (3) to the vehicle component (1) and through the storage unit (8) in the temporary operational state (S_{T}), wherein the method further comprises the step: activating the pump (9) upon detection of the cooling requirement or the heating requirement of the vehicle component (1).

21. The method according to any of claims 13 to 20,
wherein the method further comprises the steps: fully separating the main thermal control circuit (2) from the secondary thermal control circuit (3) by the valve unit (4) in the normal operational state (S_{N});
fully separating the secondary thermal control circuit (3) from the main thermal control circuit (2) by the valve unit (4) in the temporary operational state (S_{T}).

22. A vehicle comprising a thermal management system (S) for cooling or heating a vehicle component (1), according to any of claims 1 to 12.

## Patentansprüche

1. Wärmemanagementsystem (S) zum Kühlen oder Heizen einer Fahrzeugkomponente (1), wobei das Wärmemanagementsystem (S) einen Hauptwärmeregelkreis (2), der mit der Fahrzeugkomponente (1) verbunden ist, und einen Sekundärwärmeregelkreis (3), der mit der Fahrzeugkomponente (1) verbunden ist, umfasst,
wobei das Wärmemanagementsystem (S) dazu ausgelegt ist, in einem normalen Betriebszustand (S_{N}) mittels des Hauptwärmeregelkreises (2) oder in einem temporären Betriebszustand (S_{T}) mittels des Sekundärwärmeregelkreises (3) betrieben zu werden,
wobei das Wärmemanagementsystem (S) eine Ventileinheit (4) umfasst, wobei der Hauptwärmeregelkreis (2) im normalen Betriebszustand (S_{N}) über die Ventileinheit (4) mit der Fahrzeugkomponente (1) verbunden ist, und wobei der Sekundärwärmeregelkreis (3) im temporären Betriebszustand (S_{T}) bei Erkennung eines Kühl- oder -Heizbedarfs der Fahrzeugkomponente (1) vorübergehend über die Ventileinheit (4) mit der Fahrzeugkomponente (1) verbunden wird,
wobei das Wärmemanagementsystem (S) dazu ausgelegt ist, den Sekundärwärmeregelkreis (3) im temporären Betriebszustand (S_{T}) zur Kühlung oder Heizung der Fahrzeugkomponente (1) vorübergehend zu aktivieren,
wobei die Ventileinheit (4) einen ersten Auslassströmungsanschluss (6a) und einen ersten Einlassströmungsanschluss (5a) umfasst, die mit der Fahrzeugkomponente (1) verbunden sind, wobei die Ventileinheit (4) einen zweiten Einlassströmungsanschluss (5b) und einen zweiten Auslassströmungsanschluss (6b) umfasst, die mit dem Hauptwärmeregelkreis (2) verbunden sind, und wobei die Ventileinheit (4) einen dritten Einlassströmungsanschluss (5c) und einen dritten Auslassströmungsanschluss (6c) umfasst, die mit dem Sekundärwärmeregelkreis (3) verbunden sind.

2. Wärmemanagementsystem (S) nach Anspruch 1,
wobei das Wärmemanagementsystem (S) dazu ausgelegt ist, bei einem Boost-Kühl- oder -Heizbedarf der Fahrzeugkomponente (1) im temporären Betriebszustand (S_{T}) mittels des Sekundärwärmeregelkreises (3) betrieben zu werden.

3. Wärmemanagementsystem (S) nach Anspruch 2,
wobei das Wärmemanagementsystem (S) mindestens einen Sensor (7) umfasst, der zur Erkennung des Boost-Kühl- oder -Heizbedarfs der Fahrzeugkomponente (1) ausgelegt ist, wobei der mindestens eine Sensor (7) ein Temperatursensor ist, der mit dem Hauptwärmeregelkreis (2) und/oder der Fahrzeugkomponente (1) verbunden ist.

4. Wärmemanagementsystem (S) nach einem der Ansprüche 1 bis 3,
wobei das Wärmemanagementsystem (S) dazu ausgelegt ist, bei einem Störungskühlbedarf des Hauptwärmeregelkreises (2) im temporären Betriebszustand (S_{T}) mittels des Sekundärwärmeregelkreises (3) betrieben zu werden, wobei die Störung des Hauptwärmeregelkreises (2) ein Leck von Wärmeträgerfluid (F) aus dem Hauptwärmeregelkreis (2) oder eine Blockierung von Wärmeträgerfluid (F) im Hauptwärmeregelkreis (2) ist.

5. Wärmemanagementsystem (S) nach Anspruch 4,
wobei das Wärmemanagementsystem (S) mindestens einen Sensor (7) umfasst, der zur Erkennung des Störungskühlbedarfs des Hauptwärmeregelkreises (2) ausgelegt ist, wobei der mindestens eine Sensor (7) ein Drucksensor, ein Temperatursensor und/oder ein Durchflusssensor ist, der mit dem Hauptwärmeregelkreis (2) verbunden ist, wobei der mindestens eine Sensor (7) dazu ausgelegt ist, das Leck oder die Blockierung des Hauptwärmeregelkreises (2) zu erkennen.

6. Wärmemanagementsystem (S) nach einem vorhergehenden Anspruch,
wobei die Ventileinheit (4) dazu geeignet ist, den Sekundärwärmeregelkreis (3) im normalen Betriebszustand (S_{N}) von der Fluidkommunikation mit der Fahrzeugkomponente (1) zu trennen, und wobei die Ventileinheit (4) dazu geeignet ist, den Hauptwärmeregelkreis (2) im temporären Betriebszustand (S_{T}) von der Fluidkommunikation mit der Fahrzeugkomponente (1) zu trennen.

7. Wärmemanagementsystem (S) nach einem vorhergehenden Anspruch,
wobei das Wärmemanagementsystem (S) einen weiteren Wärmeregelkreis (10) umfasst, der mit der Fahrzeugkomponente (1) und mit der Ventileinheit (4) verbunden ist, wobei jeder der Hauptwärmeregelkreise (2) und der Sekundärwärmeregelkreise (3) über die Ventileinheit (4) und den weiteren Wärmeregelkreis (10) mit der Fahrzeugkomponente (1) verbindbar ist.

8. Wärmemanagementsystem (S) nach einem vorhergehenden Anspruch,
wobei die Ventileinheit (4) einen Ventilkörper (4a) umfasst, wobei der Ventilkörper (4a) im normalen Betriebszustand (S_{N}) in einer ersten Ventilposition (P_{V1}) angeordnet ist und wobei der Ventilkörper (4a) im temporären Betriebszustand (S_{T}) in einer zweiten Ventilposition (P_{V2}) angeordnet ist,
wobei in der ersten Ventilposition (P_{V1}) der zweite Einlassströmungsanschluss (5b) in Fluidkommunikation mit dem ersten Auslassströmungsanschluss (6a) steht und der zweite Auslassströmungsanschluss (6b) in Fluidkommunikation mit dem ersten Einlassströmungsanschluss (5a) steht,
wobei in der zweiten Ventilposition (P_{V2}) der dritte Einlassströmungsanschluss (5c) in Fluidkommunikation mit dem ersten Auslassströmungsanschluss (6a) steht und der dritte Auslassströmungsanschluss (6c) in Fluidkommunikation mit dem ersten Einlassströmungsanschluss (5a) steht.

9. Wärmemanagementsystem (S) nach Anspruch 8,
wobei in der ersten Ventilposition (P_{V1}) der Ventilkörper (4a) eine Fluidkommunikation zwischen dem dritten Einlassströmungsanschluss (5c) und dem ersten Auslassströmungsanschluss (6a) blockiert und eine Fluidkommunikation zwischen dem dritten Auslassströmungsanschluss (6c) und dem ersten Einlassströmungsanschluss (5a) blockiert,
wobei in der zweiten Ventilposition (P_{V2}) der Ventilkörper (4a) eine Fluidkommunikation zwischen dem zweiten Einlassströmungsanschluss (5b) und dem ersten Auslassströmungsanschluss (6a) blockiert und eine Fluidkommunikation zwischen dem zweiten Auslassströmungsanschluss (6b) und dem ersten Einlassströmungsanschluss (5a) blockiert.

10. Wärmemanagementsystem (S) nach einem vorhergehenden Anspruch,
wobei der Sekundärwärmeregelkreis (3) eine Speichereinheit (8) umfasst, die zur Aufnahme eines Volumens von Wärmeträgerfluid (F) ausgelegt ist, wobei das Volumen des Wärmeträgerfluids (F) als Wärmepuffer zur Kühlung oder Heizung der Fahrzeugkomponente (1) im temporären Betriebszustand (S_{T}) angeordnet ist.

11. Wärmemanagementsystem (S) nach Anspruch 10,
wobei der Sekundärwärmeregelkreis (3) eine Pumpe (9) zur Zirkulation von Wärmeträgerfluid (F) im Sekundärwärmeregelkreis (3) zur Fahrzeugkomponente (1) und durch die Speichereinheit (8) im temporären Betriebszustand (S_{T}) umfasst, wobei das Wärmemanagementsystem (S) dazu ausgelegt ist, die Pumpe (9) bei Erkennung des Kühl- oder - Heizbedarfs der Fahrzeugkomponente (1) zu aktivieren.

12. Wärmemanagementsystem (S) nach einem vorhergehenden Anspruch,
wobei im normalen Betriebszustand (S_{N}) der Hauptwärmeregelkreis (2) durch die Ventileinheit (4) vollständig vom Sekundärwärmeregelkreis (3) getrennt ist, und wobei im temporären Betriebszustand (S_{T}) der Sekundärwärmeregelkreis (3) durch die Ventileinheit (4) vollständig vom Hauptwärmeregelkreis (2) getrennt ist.

13. Verfahren zum Betreiben eines Wärmemanagementsystems (S) zur Kühlung oder Heizung einer Fahrzeugkomponente (1), wobei das Wärmemanagementsystem (S) einen Hauptwärmeregelkreis (2), der mit der Fahrzeugkomponente (1) verbunden ist, einen Sekundärwärmeregelkreis (3), der mit der Fahrzeugkomponente (1) verbunden ist, und eine Ventileinheit (4) umfasst,
wobei die Ventileinheit (4) einen ersten Auslassströmungsanschluss (6a) und einen ersten Einlassströmungsanschluss (5a) umfasst, die mit der Fahrzeugkomponente (1) verbunden sind, wobei die Ventileinheit (4) einen zweiten Einlassströmungsanschluss (5b) und einen zweiten Auslassströmungsanschluss (6b) umfasst, die mit dem Hauptwärmeregelkreis (2) verbunden sind, wobei die Ventileinheit (4) einen dritten Einlassströmungsanschluss (5c) und einen dritten Auslassströmungsanschluss (6c) umfasst, die mit dem Sekundärwärmeregelkreis (3) verbunden sind, wobei die Ventileinheit (4) einen Ventilkörper (4a) umfasst,
wobei das Wärmemanagementsystem (S) in einem normalen Betriebszustand (S_{N}) mittels des Hauptwärmeregelkreises (2) oder in einem temporären Betriebszustand (S_{T}) mittels des Sekundärwärmeregelkreises (3) betrieben wird, wobei das Verfahren die folgenden Schritte umfasst:
Herstellen der Fluidkommunikation des Hauptwärmeregelkreises (2) mit der Fahrzeugkomponente (1) über die Ventileinheit (4) im normalen Betriebszustand (S_{N});
vorübergehendes Herstellen der Fluidkommunikation des Sekundärwärmeregelkreises (3) mit der Fahrzeugkomponente (1) über die Ventileinheit (4) im temporären Betriebszustand (S_{T}) bei Erkennung eines Kühl- oder -Heizbedarfs der Fahrzeugkomponente (1) und vorübergehendes Aktivieren des Sekundärwärmeregelkreises (3) zur Kühlung oder Heizung der Fahrzeugkomponente (1) im temporären Betriebszustand (S_{T});
Anordnen des Ventilkörpers (4a) in einer ersten Ventilposition (P_{V1}) im normalen Betriebszustand (S_{N}), wobei in der ersten Ventilposition (P_{V1}) der zweite Einlassströmungsanschluss (5b) in Fluidkommunikation mit dem ersten Auslassströmungsanschluss (6a) steht und der zweite Auslassströmungsanschluss (6b) in Fluidkommunikation mit dem ersten Einlassströmungsanschluss (5a) steht;
Anordnen des Ventilkörpers (4a) in einer zweiten Ventilposition (P_{V2}) im temporären Betriebszustand (S_{T}), wobei in der zweiten Ventilposition (P_{V2}) der dritte Einlassströmungsanschluss (5c) in Fluidkommunikation mit dem ersten Auslassströmungsanschluss (6a) steht und der dritte Auslassströmungsanschluss (6c) in Fluidkommunikation mit dem ersten Einlassströmungsanschluss (5a) steht.

14. Verfahren nach Anspruch 13,
wobei das Verfahren ferner den Schritt umfasst: Betreiben des Wärmemanagementsystems (S) im temporären Betriebszustand (S_{T}) mittels des Sekundärwärmeregelkreises (3) bei einem Boost-Kühl- oder -Heizbedarf der Fahrzeugkomponente (1).

15. Verfahren nach Anspruch 14,
wobei das Wärmemanagementsystem (S) mindestens einen Sensor (7) umfasst, wobei der mindestens eine Sensor (7) ein Temperatursensor ist, der mit dem Hauptwärmeregelkreis (2) und/oder der Fahrzeugkomponente (1) verbunden ist, wobei das Verfahren ferner den Schritt umfasst: Erkennen des Boost-Kühl- oder -Heizbedarfs der Fahrzeugkomponente (1) durch den mindestens einen Sensor (7).

16. Verfahren nach einem der Ansprüche 13 bis 15,
wobei das Verfahren ferner den Schritt umfasst: Betreiben des Wärmemanagementsystems (S) im temporären Betriebszustand (S_{T}) mittels des Sekundärwärmeregelkreises (3) bei einem Störungskühlbedarf des Hauptwärmeregelkreises (2), wobei die Störung des Hauptwärmeregelkreises (2) ein Leck von Wärmeträgerfluid (F) aus dem Hauptwärmeregelkreis (2) oder eine Blockierung von Wärmeträgerfluid (F) im Hauptwärmeregelkreis (2) ist.

17. Verfahren nach Anspruch 16,
wobei das Wärmemanagementsystem (S) mindestens einen Sensor (7) umfasst, wobei der mindestens eine Sensor (7) ein Drucksensor, ein Temperatursensor und/oder ein Durchflusssensor ist, der mit dem Hauptwärmeregelkreis (2) verbunden ist, wobei das Verfahren ferner den Schritt umfasst: Erkennen des Lecks oder der Blockierung des Hauptwärmeregelkreises (2) durch den mindestens einen Sensor (7).

18. Verfahren nach einem der Ansprüche 13 bis 17,
wobei das Verfahren ferner die Schritte umfasst: Trennen des Sekundärwärmeregelkreises (3) von der Fluidkommunikation mit der Fahrzeugkomponente (1) durch die Ventileinheit (4) im normalen Betriebszustand (S_{N});
Trennen des Hauptwärmeregelkreises (2) von der Fluidkommunikation mit der Fahrzeugkomponente (1) durch die Ventileinheit (4) im temporären Betriebszustand (S_{T});

19. Verfahren nach einem der Ansprüche 13 bis 18,
wobei das Verfahren ferner die Schritte umfasst: Blockieren einer Fluidkommunikation zwischen dem dritten Einlassströmungsanschluss (5c) und dem ersten Auslassströmungsanschluss (6a) und Blockieren einer Fluidkommunikation zwischen dem dritten Auslassströmungsanschluss (6c) und dem ersten Einlassströmungsanschluss (5a) durch den Ventilkörper (4a) in der ersten Ventilposition (P_{V1});
Blockieren einer Fluidkommunikation zwischen dem zweiten Einlassströmungsanschluss (5b) und dem ersten Auslassströmungsanschluss (6a) und Blockieren einer Fluidkommunikation zwischen dem zweiten Auslassströmungsanschluss (6b) und dem ersten Einlassströmungsanschluss (5a) durch den Ventilkörper (4a) in der zweiten Ventilposition (P_{V2}).

20. Verfahren nach einem der Ansprüche 13 bis 19,
wobei der Sekundärwärmeregelkreis (3) eine Speichereinheit (8) umfasst, die zur Aufnahme eines Volumens von Wärmeträgerfluid (F) ausgelegt ist, wobei das Volumen des Wärmeträgerfluids (F) als Wärmepuffer zur Kühlung oder Heizung der Fahrzeugkomponente (1) im temporären Betriebszustand (S_{T}) angeordnet ist, wobei der Sekundärwärmeregelkreis (3) eine Pumpe (9) zur Zirkulation von Wärmeträgerfluid (F) im Sekundärwärmeregelkreis (3) zur Fahrzeugkomponente (1) und durch die Speichereinheit (8) im temporären Betriebszustand (S_{T}) umfasst, wobei das Verfahren ferner den Schritt umfasst: Aktivieren der Pumpe (9) bei Erkennung des Kühl- oder -Heizbedarfs der Fahrzeugkomponente (1) .

21. Verfahren nach einem der Ansprüche 13 bis 20,
wobei das Verfahren ferner die Schritte umfasst: vollständiges Trennen des Hauptwärmeregelkreises (2) vom Sekundärwärmeregelkreis (3) durch die Ventileinheit (4) im normalen Betriebszustand (S_{N});
vollständiges Trennen des Sekundärwärmeregelkreises (3) vom Hauptwärmeregelkreis (2) durch die Ventileinheit (4) im temporären Betriebszustand (S_{T}).

22. Fahrzeug, das ein Wärmemanagementsystem (S) zum Kühlen oder Heizen einer Fahrzeugkomponente (1) gemäß einem der Ansprüche 1 bis 12 umfasst.

## Revendications

1. Système de gestion thermique (S) pour le refroidissement ou le chauffage d'un composant de véhicule (1), dans lequel le système de gestion thermique (S) comprend un circuit de commande thermique principal (2) connecté au composant de véhicule (1) et un circuit de commande thermique secondaire (3) connecté au composant de véhicule (1),
dans lequel le système de gestion thermique (S) est configuré pour être actionné dans un état opérationnel normal (S_{N}) au moyen du circuit de commande thermique principal (2), ou dans un état opérationnel temporaire (S_{T}) au moyen du circuit de commande thermique secondaire (3),
dans lequel le système de gestion thermique (S) comprend une unité de vanne (4), dans lequel le circuit de commande thermique principal (2) est connecté au composant de véhicule (1) via l'unité de vanne (4) dans l'état opérationnel normal (S_{N}), et dans lequel le circuit de commande thermique secondaire (3) est connecté temporairement au composant de véhicule (1) via l'unité de vanne (4) dans l'état opérationnel temporaire (S_{T}) lors de la détection d'une exigence de refroidissement ou d'une exigence de chauffage du composant de véhicule (1),
dans lequel le système de gestion thermique (S) est configuré pour activer temporairement le circuit de commande thermique secondaire (3) pour le refroidissement ou le chauffage du composant de véhicule (1) dans l'état opérationnel temporaire (S_{T}),
dans lequel l'unité de vanne (4) comprend un premier orifice d'écoulement de sortie (6a) et un premier orifice d'écoulement d'entrée (5a) connectés au composant de véhicule (1), dans lequel l'unité de vanne (4) comprend un deuxième orifice d'écoulement d'entrée (5b) et un deuxième orifice d'écoulement de sortie (6b) connectés au circuit de commande thermique principal (2), et dans lequel l'unité de vanne (4) comprend un troisième orifice d'écoulement d'entrée (5c) et un troisième orifice d'écoulement de sortie (6c) connectés au circuit de commande thermique secondaire (3).

2. Système de gestion thermique (S) selon la revendication 1, dans lequel le système de gestion thermique (S) est configuré pour être actionné dans l'état opérationnel temporaire (S_{T}) au moyen du circuit de commande thermique secondaire (3) lors d'une exigence de refroidissement ou de chauffage de suralimentation du composant de véhicule (1).

3. Système de gestion thermique (S) selon la revendication 2, dans lequel le système de gestion thermique (S) comprend au moins un capteur (7) configuré pour détecter l'exigence de refroidissement ou de chauffage de suralimentation du composant de véhicule (1), dans lequel l'au moins un capteur (7) est un capteur de température connecté au circuit de commande thermique principal (2) et/ou au composant de véhicule (1).

4. Système de gestion thermique (S) selon l'une quelconque des revendications 1 à 3,
dans lequel le système de gestion thermique (S) est configuré pour être actionné dans l'état opérationnel temporaire (S_{T}) au moyen du circuit de commande thermique secondaire (3) lors d'une exigence de refroidissement par dysfonctionnement du circuit de commande thermique principal (2), dans lequel le dysfonctionnement du circuit de commande thermique principal (2) est une fuite de fluide de transfert thermique (F) provenant du circuit de commande thermique principal (2) ou un blocage de fluide de transfert thermique (F) dans le circuit de commande thermique principal (2).

5. Système de gestion thermique (S) selon la revendication 4, dans lequel le système de gestion thermique (S) comprend au moins un capteur (7) configuré pour détecter l'exigence de refroidissement par dysfonctionnement du circuit de commande thermique principal (2), dans lequel l'au moins un capteur (7) est un capteur de pression, un capteur de température et/ou un capteur de débit connecté au circuit de commande thermique principal (2), dans lequel l'au moins un capteur (7) est configuré pour détecter la fuite ou le blocage du circuit de commande thermique principal (2).

6. Système de gestion thermique (S) selon l'une quelconque des revendications précédentes,
dans lequel l'unité de vanne (4) est adaptée pour déconnecter le circuit de commande thermique secondaire (3) de toute communication de fluide avec le composant de véhicule (1) dans l'état opérationnel normal (S_{N}), et dans lequel l'unité de vanne (4) est adaptée pour déconnecter le circuit de commande thermique principal (2) de toute communication de fluide avec le composant de véhicule (1) dans l'état opérationnel temporaire (S_{T}).

7. Système de gestion thermique (S) selon l'une quelconque des revendications précédentes,
dans lequel le système de gestion thermique (S) comprend un autre circuit de commande thermique (10) connecté au composant de véhicule (1) et à l'unité de vanne (4), dans lequel chacun du circuit de commande thermique principal (2) et du circuit de commande thermique secondaire (3) peut être connecté au composant de véhicule (1) via l'unité de vanne (4) et l'autre circuit de commande thermique (10).

8. Système de gestion thermique (S) selon l'une quelconque des revendications précédentes,
dans lequel l'unité de vanne (4) comprend un corps de vanne (4a), dans lequel le corps de vanne (4a) dans l'état opérationnel normal (S_{N}) est agencé dans une première position de vanne (P_{V1}) et dans lequel le corps de vanne (4a) dans l'état opérationnel temporaire (S_{T}) est agencé dans une deuxième position de vanne (P_{V2}),
dans lequel dans la première position de vanne (P_{V1}) le deuxième orifice d'écoulement d'entrée (5b) est en communication de fluide avec le premier orifice d'écoulement de sortie (6a) et le deuxième orifice d'écoulement de sortie (6b) est en communication de fluide avec le premier orifice d'écoulement d'entrée (5a),
dans lequel dans la deuxième position de vanne (P_{V2}) le troisième orifice d'écoulement d'entrée (5c) est en communication de fluide avec le premier orifice d'écoulement de sortie (6a) et le troisième orifice d'écoulement de sortie (6c) est en communication de fluide avec le premier orifice d'écoulement d'entrée (5a).

9. Système de gestion thermique (S) selon la revendication 8, dans lequel dans la première position de vanne (P_{V1}) le corps de vanne (4a) bloque la communication de fluide entre le troisième orifice d'écoulement d'entrée (5c) et le premier orifice d'écoulement de sortie (6a) et bloque la communication de fluide entre le troisième orifice d'écoulement de sortie (6c) et le premier orifice d'écoulement d'entrée (5a),
dans lequel dans la deuxième position de vanne (P_{V2}) le corps de vanne (4a) bloque la communication de fluide entre le deuxième orifice d'écoulement d'entrée (5b) et le premier orifice d'écoulement de sortie (6a) et bloque la communication de fluide entre le deuxième orifice d'écoulement de sortie (6b) et le premier orifice d'écoulement d'entrée (5a).

10. Système de gestion thermique (S) selon l'une quelconque des revendications précédentes,
dans lequel le circuit de commande thermique secondaire (3) comprend une unité de stockage (8) configurée pour contenir un volume de fluide de transfert thermique (F), dans lequel le volume de fluide de transfert thermique (F) est agencé sous forme de tampon thermique pour le refroidissement ou le chauffage du composant de véhicule (1) dans l'état opérationnel temporaire (S_{T}).

11. Système de gestion thermique (S) selon la revendication 10, dans lequel le circuit de commande thermique secondaire (3) comprend une pompe (9) pour faire circuler du fluide de transfert thermique (F) dans le circuit de commande thermique secondaire (3) vers le composant de véhicule (1) et à travers l'unité de stockage (8) dans l'état opérationnel temporaire (S_{T}), dans lequel le système de gestion thermique (S) est configuré pour activer la pompe (9) lors de la détection de l'exigence de refroidissement ou de l'exigence de chauffage du composant de véhicule (1).

12. Système de gestion thermique (S) selon l'une quelconque des revendications précédentes,
dans lequel dans l'état opérationnel normal (S_{N}) le circuit de commande thermique principal (2) est entièrement séparé du circuit de commande thermique secondaire (3) par l'unité de vanne (4), et dans lequel dans l'état opérationnel temporaire (S_{T}) le circuit de commande thermique secondaire (3) est entièrement séparé du circuit de commande thermique principal (2) par l'unité de vanne (4).

13. Procédé de fonctionnement d'un système de gestion thermique (S) pour le refroidissement ou le chauffage d'un composant de véhicule (1), dans lequel le système de gestion thermique (S) comprend un circuit de commande thermique principal (2) connecté au composant de véhicule (1), un circuit de commande thermique secondaire (3) connecté au composant de véhicule (1), et une unité de vanne (4),
dans lequel l'unité de vanne (4) comprend un premier orifice d'écoulement de sortie (6a) et un premier orifice d'écoulement d'entrée (5a) connectés au composant de véhicule (1), dans lequel l'unité de vanne (4) comprend un deuxième orifice d'écoulement d'entrée (5b) et un deuxième orifice d'écoulement de sortie (6b) connectés au circuit de commande thermique principal (2), dans lequel l'unité de vanne (4) comprend un troisième orifice d'écoulement d'entrée (5c) et un troisième orifice d'écoulement de sortie (6c) connectés au circuit de commande thermique secondaire (3), dans lequel l'unité de vanne (4) comprend un corps de vanne (4a),
dans lequel le système de gestion thermique (S) est actionné dans un état opérationnel normal (S_{N}) au moyen du circuit de commande thermique principal (2), ou dans un état opérationnel temporaire (S_{T}) au moyen du circuit de commande thermique secondaire (3), dans lequel le procédé comprend les étapes consistant à :
agencer le circuit de commande thermique principal (2) en communication de fluide avec le composant de véhicule (1) via l'unité de vanne (4) dans l'état opérationnel normal (S_{N}) ;
agencer le circuit de commande thermique secondaire (3) temporairement en communication de fluide avec le composant de véhicule (1) via l'unité de vanne (4) dans l'état opérationnel temporaire (S_{T}) lors de la détection d'une exigence de refroidissement ou d'une exigence de chauffage du composant de véhicule (1), et activer temporairement le circuit de commande thermique secondaire (3) pour le refroidissement ou le chauffage du composant de véhicule (1) dans l'état opérationnel temporaire (S_{T}) ;
agencer le corps de vanne (4a) dans une première position de vanne (P_{V1}) dans l'état opérationnel normal (S_{N}), dans lequel dans la première position de vanne (P_{V1}) le deuxième orifice d'écoulement d'entrée (5b) est en communication de fluide avec le premier orifice d'écoulement de sortie (6a) et le deuxième orifice d'écoulement de sortie (6b) est en communication de fluide avec le premier orifice d'écoulement d'entrée (5a) ;
agencer le corps de vanne (4a) dans une deuxième position de vanne (P_{V2}) dans l'état opérationnel temporaire (S_{T}), dans lequel dans la deuxième position de vanne (P_{V2}) le troisième orifice d'écoulement d'entrée (5c) est en communication de fluide avec le premier orifice d'écoulement de sortie (6a) et le troisième orifice d'écoulement de sortie (6c) est en communication de fluide avec le premier orifice d'écoulement d'entrée (5a).

14. Procédé selon la revendication 13,
dans lequel le procédé comprend en outre l'étape consistant à : actionner le système de gestion thermique (S) dans l'état opérationnel temporaire (S_{T}) au moyen du circuit de commande thermique secondaire (3) lors d'une exigence de refroidissement ou de chauffage de suralimentation du composant de véhicule (1).

15. Procédé selon la revendication 14,
dans lequel le système de gestion thermique (S) comprend au moins un capteur (7), dans lequel l'au moins un capteur (7) est un capteur de température connecté au circuit de commande thermique principal (2) et/ou au composant de véhicule (1), dans lequel le procédé comprend en outre l'étape consistant à : détecter l'exigence de refroidissement ou de chauffage de suralimentation du composant de véhicule (1) par l'au moins un capteur (7).

16. Procédé selon l'une quelconque des revendications 13 à 15,
dans lequel le procédé comprend en outre l'étape consistant à : actionner le système de gestion thermique (S) dans l'état opérationnel temporaire (S_{T}) au moyen du circuit de commande thermique secondaire (3) lors d'une exigence de refroidissement par dysfonctionnement du circuit de commande thermique principal (2), dans lequel le dysfonctionnement du circuit de commande thermique principal (2) est une fuite de fluide de transfert thermique (F) provenant du circuit de commande thermique principal (2) ou un blocage de fluide de transfert thermique (F) dans le circuit de commande thermique principal (2).

17. Procédé selon la revendication 16,
dans lequel le système de gestion thermique (S) comprend au moins un capteur (7), dans lequel l'au moins un capteur (7) est un capteur de pression, un capteur de température et/ou un capteur de débit connecté au circuit de commande thermique principal (2), dans lequel le procédé comprend en outre l'étape consistant à : détecter la fuite ou le blocage du circuit de commande thermique principal (2) par l'au moins un capteur (7).

18. Procédé selon l'une quelconque des revendications 13 à 17, dans lequel le procédé comprend en outre les étapes consistant à : déconnecter le circuit de commande thermique secondaire (3) de toute communication de fluide avec le composant de véhicule (1) par l'unité de vanne (4) dans l'état opérationnel normal (S_{N}) ;
déconnecter le circuit de commande thermique principal (2) de toute communication de fluide avec le composant de véhicule (1) par l'unité de vanne (4) dans l'état opérationnel temporaire (S_{T}).

19. Procédé selon l'une quelconque des revendications 13 à 18, dans lequel le procédé comprend en outre les étapes consistant à : bloquer la communication de fluide entre le troisième orifice d'écoulement d'entrée (5c) et le premier orifice d'écoulement de sortie (6a) et bloquer la communication de fluide entre le troisième orifice d'écoulement de sortie (6c) et le premier orifice d'écoulement d'entrée (5a) par le corps de vanne (4a) dans la première position de vanne (P_{V1}) ;
bloquer la communication de fluide entre le deuxième orifice d'écoulement d'entrée (5b) et le premier orifice d'écoulement de sortie (6a) et bloquer la communication de fluide entre le deuxième orifice d'écoulement de sortie (6b) et le premier orifice d'écoulement d'entrée (5a) par le corps de vanne (4a) dans la deuxième position de vanne (P_{V2}).

20. Procédé selon l'une quelconque des revendications 13 à 19, dans lequel le circuit de commande thermique secondaire (3) comprend une unité de stockage (8) configurée pour contenir un volume de fluide de transfert thermique (F), dans lequel le volume de fluide de transfert thermique (F) est agencé sous forme de tampon thermique pour le refroidissement ou le chauffage du composant de véhicule (1) dans l'état opérationnel temporaire (S_{T}), dans lequel le circuit de commande thermique secondaire (3) comprend une pompe (9) pour faire circuler du fluide de transfert thermique (F) dans le circuit de commande thermique secondaire (3) vers le composant de véhicule (1) et à travers l'unité de stockage (8) dans l'état opérationnel temporaire (S_{T}), dans lequel le procédé comprend en outre l'étape consistant à : activer la pompe (9) lors de la détection de l'exigence de refroidissement ou de l'exigence de chauffage du composant de véhicule (1).

21. Procédé selon l'une quelconque des revendications 13 à 20, dans lequel le procédé comprend en outre les étapes consistant à : séparer entièrement le circuit de commande thermique principal (2) du circuit de commande thermique secondaire (3) par l'unité de vanne (4) dans l'état opérationnel normal (S_{N}) ;
séparer entièrement le circuit de commande thermique secondaire (3) du circuit de commande thermique principal (2) par l'unité de vanne (4) dans l'état opérationnel temporaire (S_{T}).

22. Véhicule comprenant un système de gestion thermique (S) pour le refroidissement ou le chauffage d'un composant de véhicule (1), selon l'une quelconque des revendications 1 à 12.
